# EUROPEAN PATENT SPECIFICATION

(11) **EP 2 536 247 B1**
(45) Date of publication and mention of the grant of the patent: **19.12.2018**
(21) Application number: 12161555.3
(22) Date of filing: 27.03.2012
(51) Int. Cl.: H04W 76/38

(54) **Wireless communication apparatus that operates as master station or remote station in wireless network and computer readable medium**
Drahtlose Kommunikationsvorrichtung als Masterstation oder Remote-Station in einem drahtlosen Netzwerk und computerlesbares Medium
Appareil de communication sans fil qui fonctionne en tant que station maître ou station à distance dans un réseau sans fil et support lisible par ordinateur

(30) Priority: 15.06.2011 JP 2011133611
(43) Date of publication of application: 19.12.2012
(73) Proprietor: Brother Kogyo Kabushiki Kaisha, Nagoya-shi, Aichi 467-8561 (JP)
(72) Inventor: Nogawa, Hideki, Nagoya-shi, Aichi 467-8562 (JP)
(74) Representative: J A Kemp

(56) References cited:
- US-A1- 2006 079 182
- US-A1- 2007 173 270
- US-A1- 2009 258 596
- WI-FI ALLIANCE: "Wi-Fi Peer-to-Peer (P2P) Specification v1.1", WI-FI ALLIANCE SPECIFICATION,, 1 January 2010 (2010-01-01), pages 1-159, XP009163866,
- Wi-Fi Alliance: "Wi-Fi CERTIFIED Wi-Fi Direct", , 1 October 2010 (2010-10-01), pages 1-14, XP055041124, Retrieved from the Internet: URL:http://www.wi-fi.org/knowledge-center/ white-papers/wi-fi-certified-wi-fi-direct% E2%84%A2-personal-portable-wi-fi%C2%AE-con nect-devices [retrieved on 2012-10-16]

## Description

### BACKGROUND OF THE INVENTION

### 1. Field of the Invention

A technique disclosed in the present disclosure relates to a wireless communication apparatus capable of selectively operating as a group owner or a client in a Wi-Fi Direct wireless network.

### 2. Description of Related Art

In "Wi-Fi Peer-to-Peer (P2P) Technical Specification Version 1.1" (Wi-Fi Alliance, 2010-01-01), Wi-Fi Direct (hereinafter referred to as "WFD") designed by Wi-Fi Alliance is described. A wireless network according to WFD includes a single device (hereinafter referred to as the "G/O device") that operates as a group owner and one or more devices (hereinafter referred to as the "client devices") that operate as clients managed by the G/O device. In the technique disclosed in "Wi-Fi Peer-to-Peer (P2P) Technical Specification Version 1.1", the G/O device immediately stops the operation thereof as a G/O when the number of client devices managed thereby has become 0. As a result, the wireless network is immediately lost. In such a case, for example, the wireless network needs to be constructed again immediately after being lost.

US 2009/0258596 A1 discloses the present example provides a modification of the link supervision timer for an enhanced user experience with wireless Bluetooth (RTM) devices, by allowing loss of the wireless link to be handled more effectively. The link supervision timer may be changed without modifying the device profile being used. The change in the timer may be based upon the profile of the communications that is occurring, and upon the current state of the communications.

US 2007/0173270 A1 discloses systems and methods for communication between master and slave devices on a network such as a piconet or Bluetooth network.

US 2006/0079182 A1 discloses a handsfree device being multi-profile compatible, with a connection for a handsfree profile (HFP) with a mobile phone handset, that cuts off the connected for the HFP based on a user's operation. After cutting off, the handsfree device establishes a connection for a dial-up network profile (DUN), and subsequently transmits a request for a connection for the HFP while maintaining the connection for the DUN.

### SUMMARY OF THE INVENTION

In the present disclosure, a technique is provided by which a master device operating as a group owner in a Wi-Fi Direct wireless network can appropriately execute the operation as the group owner.

According to the invention, there is provided a wireless communication apparatus according to claim 1.

The above wireless communication apparatus does not immediately stop the operation thereof as a group owner even if the number of remote devices becomes 0 (that is, a continuation period during which the operation as the group owner continues is provided). If the number of remote devices becomes 1 or more before the continuation period elapses, the wireless communication apparatus continues the operation thereof as a group owner even after the lapse of the continuation period. If the number of remote devices remains 0 until the continuation period elapses, the wireless communication apparatus stops the operation thereof as a group owner after the lapse of the continuation period. That is, the wireless communication apparatus continues or stops the operation thereof as a group owner in accordance with whether or not the number of remote devices becomes 1 or more before the continuation period elapses. Therefore, the wireless communication apparatus can appropriately execute the operation thereof as a group owner. As a result, for example, the wireless network need not be constructed again immediately after being lost.

In the first case where the number of remote devices to be managed becomes 0 without obtaining a disconnect signal from a last removed remote device, which is a last device that has been removed from the particular network among the one or more remote devices to be managed, the operation control unit may continue the operation of the wireless communication apparatus as the group owner until the continuation period elapses. In a second case where the number of remote devices to be managed becomes 0 while the disconnect signal is obtained from the last removed remote device, the operation control unit may stop the operation of the wireless communication apparatus as the group owner before the continuation period elapses. According to this configuration, the wireless communication apparatus can stop the operation thereof as a group owner at an appropriate timing in accordance with whether or not a disconnect signal has been obtained from a last removed remote device.

The operation control unit may comprises: a holding period determination unit configured to, each time a first-type remote device among the one or more remote devices to be managed is removed from the particular wireless network, determine a holding period that begins at a timing at which the first-type remote device is removed from the particular wireless network, and configured not to, if a second-type remote device among the one or more remote devices to be managed is removed from the particular wireless network, determine the holding period; and a continuation period determination unit configured to, in the first case where the number of remote devices to be managed becomes 0, determine an end of one of one or more holding periods determined by the holding period determination unit that comes the latest as an end of the continuation period. The first-type remote device may be a remote device that is removed from the particular wireless network without supplying a disconnect signal to the wireless communication apparatus. The second-type remote device may be a remote device that is removed from the particular wireless network by supplying the disconnect signal to the wireless communication apparatus. According to this configuration, the wireless communication apparatus determines or does not determine a holding period in accordance with whether or not a disconnect signal has been obtained from a remote device removed from a particular wireless network. The wireless communication apparatus then determines the end of the continuation period on the basis of the ends of one or more holding periods. Therefore, the wireless communication apparatus can stop the operation thereof as a group owner at an appropriate timing.

The operation control unit may comprise: an information obtaining unit configured to obtain, from each of the one or more remote devices to be managed, category information indicating a category of each of the one or more remote devices to be managed; and a continuation period determination unit configured to determine an end of the continuation period on the basis of at least one of one or more pieces of the category information obtained from the one or more remote devices to be managed. According to this configuration, because the wireless communication apparatus determines the end of the continuation period in accordance with category information obtained from a remote device to be managed, the wireless communication apparatus can stop the operation thereof as a group owner at an appropriate timing.

In the first case where the number of remote devices to be managed becomes 0, the continuation period determination unit may determine the end of the continuation period on the basis of only one piece of the category information obtained from a last removed remote device, which is a last device that has been removed from the particular wireless network among the one or more remote devices to be managed. According to this configuration, the wireless communication apparatus can easily determine an appropriate end of the continuation period on the basis of a single piece of category information obtained from the last removed remote device.

The wireless communication apparatus may further comprise: a memory configured to store a plurality of pieces of the category information and corresponding periods while associating each piece of the category information with each period. The continuation period determination unit may determine the end of the continuation period on the basis of a period associated with a piece of the category information obtained from the last removed remote device. According to this configuration, the wireless communication apparatus can appropriately determine the end of the continuation period.

The operation control unit may further comprise: a holding period determination unit configured to, each time a first-type remote device among the one or more remote devices to be managed is removed from the particular wireless network, determine a holding period on the basis of a piece of the category information obtained from the first-type remote device. The holding period may begin at a timing at which the first-type remote device is removed from the particular wireless network. In the first case where the number of remote devices to be managed becomes 0, the holding period determination unit may determine an end of one of one or more holding periods determined by the holding period determination unit that comes the latest as the end of the continuation period. According to this configuration, the wireless communication apparatus determines the holding period on the basis of category information obtained from a first-type remote device removed from a particular wireless network. The wireless communication apparatus then determines the end of the continuation period on the basis of the ends of one or more holding periods. Therefore, the wireless communication apparatus can stop the operation thereof as a group owner at an appropriate timing.

If a second-type remote device among the one or more remote devices to be managed is removed from the particular wireless network, the holding period determination unit may not determine the holding period. The first-type remote device may be a remote device that is removed from the particular wireless network without supplying a disconnect signal to the wireless communication apparatus. The second-type remote device may be a remote device that is removed from the particular wireless network by supplying the disconnect signal to the wireless communication apparatus. According to this configuration, the wireless communication apparatus determines or does not determine a holding period in accordance with whether or not a disconnect signal has been obtained from a remote device removed from a particular wireless network. The wireless communication apparatus then determines the end of the continuation period on the basis of the ends of one or more holding periods. Therefore, the wireless communication apparatus can stop the operation thereof as a group owner at an appropriate timing.

The wireless communication apparatus may further comprises: a memory configured to store a plurality of pieces of the category information and corresponding periods while associating each piece of the category information with each period. Each time the first-type remote device is removed from the particular wireless network, the holding period determination unit may determine an end of the holding period on the basis of a period associated with a piece of the category information obtained from the first-type remote device. According to this configuration, the wireless communication apparatus can appropriately determine the end of the continuation period.

According to another aspect of the invention, there is provided a computer-readable storage medium according to claim 10.

Other objects, features, and advantages will be apparent to persons of ordinary skill in the art from the following detailed description of the invention and the accompanying drawings.

### BRIEF DESCRIPTION OF THE DRAWINGS

For a more complete understanding of the present invention, needs satisfied thereby, and the objects, features, and advantages thereof, reference now is made to the following descriptions taken in connection with the accompanying drawings.
Fig. 1 illustrates an example of the configuration of a communication system.
Fig. 2 is a flowchart illustrating a wireless communication process.
Fig. 3 is a flowchart illustrating a G/O process.
Fig. 4 is a flowchart illustrating a G/O stop process according to a first embodiment.
Fig. 5 illustrates specific examples according to the first embodiment.
Fig. 6 is a flowchart illustrating a G/O stop process according to a second embodiment.
Fig. 7 illustrates specific examples according to the second embodiment.
Fig. 8 is a flowchart illustrating a G/O stop process according to a third embodiment.
Fig. 9 illustrates specific examples according to the third embodiment.
Fig. 10 illustrates a specific example according to a fourth embodiment.

### DETAILED DESCRIPTION OF EMBODIMENTS OF THE INVENTION

### (First Embodiment)

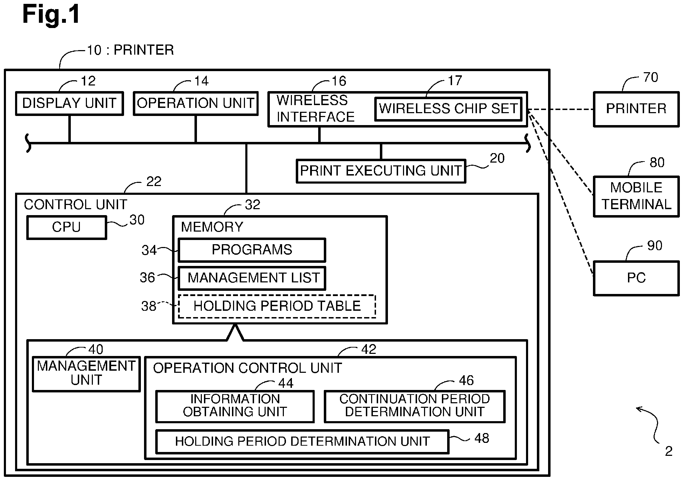

### (Configuration of System: Fig. 1)

As illustrated in Fig. 1, a communication system 2 has printers 10 and 70, a mobile terminal 80, and a personal computer (PC) 90. These devices 10, 70, 80, and 90 can execute a wireless communication function according to Wi-Fi Direct, which will be described later. It should be noted that Wi-Fi Direct will be referred to as "WFD" and the wireless communication function according to WFD will be referred to as the "WFD function" hereinafter. The devices 10, 70, 80, and 90 can construct a wireless network by establishing wireless connection in accordance with WFD. As a result, the devices 10, 70, 80, and 90 can execute wireless communication of target data to be communicated, such as print data.

### (Configuration of Printer 10)

The printer 10 has a display unit 12, an operation unit 14, a wireless interface 16, a print execution unit 20, and a control unit 22. These components 12 to 22 are connected to a bus (reference numeral is omitted). The display unit 12 is a display for displaying various pieces of information. The operation unit 14 includes a plurality of keys. A user can issue various instructions to the printer 10 by operating the operation unit 14. The wireless interface 16 is an interface for executing wireless communication. The wireless interface 16 includes a wireless chip set 17, for example, "BCM4319" manufactured by Broadcom Corp. The functions of the wireless chip set 17 will be described later. The print execution unit 20 has a print mechanism adopting a method such as an inkjet method or a laser method, and executes printing in accordance with an instruction from the control unit 22.

The control unit 22 has a central processing unit (CPU) 30 and a memory 32. The CPU 30 executes various processes in accordance with programs 34 stored in the memory 32. The memory 32 may include a read-only memory (ROM), a random-access memory (RAM), a hard disk, or the like. The memory 32 stores a management list 36, which will be described later, in addition to the programs 34. It should be noted that a holding period table 38 indicated by broken lines is utilized in second and third embodiments. When the CPU 30 executes processes in accordance with the programs 34, the functions of a management unit 40 and an operation control unit 42 are realized. The operation control unit 42 has an information obtaining unit 44, a continuation period determination unit 46, and a holding period determination unit 48. The holding period determination unit 48 is a function realized in third and fourth embodiments.

### (Configurations of Printer 70, Mobile terminal 80, and PC 90)

The printer 70 has similar configuration to the printer 10. The mobile terminal 80 and the PC 90 each have a CPU, a memory, a display, which are not illustrated.

### (WFD)

As described above, the devices 10, 70, 80, and 90 can execute the WFD function. WFD is described in "Wi-Fi Peer-to-Peer (P2P) Technical Specification Version 1.1" created by Wi-Fi Alliance. In WFD, three states, namely a group owner state (hereinafter referred to as the "G/O state"), a client state, and a device state, are defined as the states of a device. The devices (that is, the printers 10 and 70, the mobile terminal 80, the PC 90) that can execute the WFD function are capable of selectively operating in one of the three states.

A single wireless network is configured by including a device in the G/O state and a device in the client state. In a single wireless network, the number of devices in the G/O state is invariably 1, but the number of devices in the client state is 1 or more. A device in the G/O state manages one or more devices in the client state. More specifically, the device in G/O state stores a management list (refer to the management list 36 illustrated in Fig. 1) in which identification information (that is, media access control (MAC) addresses) regarding the one or more devices in the client state. When a device in the client state has newly joined the wireless network, the device in the G/O state adds identification information regarding the joined device in the client state to the management list, and when a device in the client state has been removed from the wireless network, the device in the G/O state deletes identification information regarding the removed device in the client state from the management list.

The device in the G/O state can execute wireless communication of target data (for example, data (e.g. print data) including information in the network layer of the Open Systems Interconnections (OSI) model) to be communicated with devices registered in the management list, that is, devices in the client state. However, whereas the device in the G/O state can execute wireless communication of data (for example, data that does not include information in the network layer (i.e. data in the physical layer such as a probe request signal or a probe response signal)) for joining a device that has not been registered in the management list to the wireless network with the device, the device in the G/O state cannot execute wireless communication of the above-described target data. For example, the printer 10 in the G/O state can wirelessly receive print data from the mobile terminal 80 registered in the management list 36 (that is, the mobile terminal 80 in the client state), but cannot wirelessly receive print data from a mobile terminal that is not registered in the management list 36.

In addition, the device in the G/O state can relay wireless communication of target data (e.g. print data) between a plurality of devices in the client state. For example, when the mobile terminal 80 in the client state is to wirelessly transmit print data to the other printer 70 in the client state, the mobile terminal 80 first wirelessly transmits the print data to the printer 10 in the G/O state, and then the printer 10 wirelessly transmits the print data to the printer 70. That is, the device in the G/O state can execute the function of an access point (AP) in a wireless network.

A device that has not joined a wireless network (that is, a device that has not been registered in the management list) is a device in the device state. A device in the device state can execute wireless communication of data for joining a wireless network, but cannot execute wireless communication of target data (print data or the like) through the wireless network.

### (Method for Executing Wireless Connection According To WFD)

As a method for executing wireless connection according to WFD, wireless connection methods according to Wi-Fi Protected Setup (WPS) are used. The wireless connection methods according to WPS include a Push Button Configuration (PBC) method and a Personal Identification Number (PIN) code method. In either method, a pair of devices (e.g. the printer 10 and the printer 70) between which wireless connection is to be established executes a WPS negotiation (described later) in order to establish wireless connection. In the PIN code method, the user inputs a PIN code displayed on one of the devices to the other. On the other hand, in the PBC method, the user performs certain operations corresponding to pressing buttons provided on both devices.

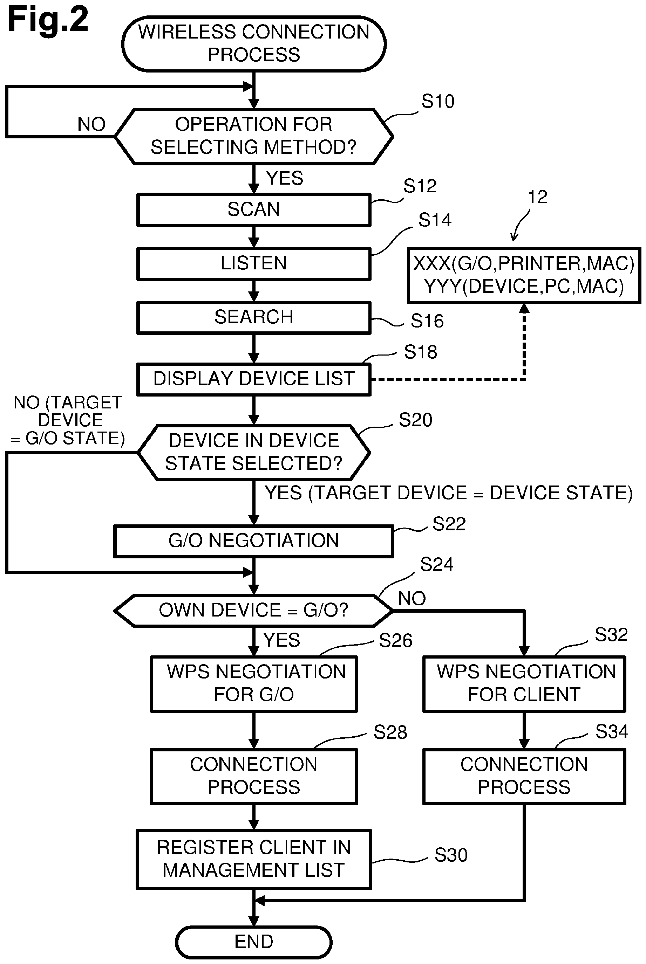

### (Wireless Connection Process: Fig. 2)

Next, details of a wireless connection process executed by the printer 10 in the device state will be described with reference to Fig. 2. In Fig. 2, the printer 10 wirelessly communicates with other devices.

While a power supply of the printer 10 is on, the control unit 22 of the printer 10 monitors whether or not an operation for selecting a method is performed (S10). The user can perform the operation for selecting a method, namely the PIN code method or the PBC method, by operating the operation unit 14 of the printer 10. When the PBC method is selected, the operation for selecting a method corresponds to pressing the buttons provided on both devices. When the user has performed the operation for selecting a method, the control unit 22 judges S10 to be YES, and the process proceeds to S12.

In S12, the information obtaining unit 44 (refer to Fig. 1) executes a Scan process. The Scan process is a process for searching for a device in the G/O state (hereinafter referred to as the "G/O state device") around the printer 10. A G/O state device uses one of first to thirteenth channels. Therefore, the information obtaining unit 44 sequentially uses the thirteen channels, namely the first to thirteenth channels, in the Scan process in order to sequentially transmit probe request signals.

Upon receiving a probe request signal from the printer 10, a G/O state device transmits a probe response signal to the printer 10. The probe response signal transmitted from the G/O state device includes an Information Element (IE) and the MAC address of the G/O state device. The IE includes information indicating that the G/O state device is in the G/O state and information indicating a device name and a category (for example, printer, PC, mobile terminal, or the like) of the G/O state device. The information obtaining unit 44 analyzes probe response signals received in the Scan process in order to find G/O state devices around the printer 10 and obtain information regarding the G/O state devices that have been found.

A device in the device state (hereinafter referred to as the "device state device") uses one of the first, sixth, and eleventh channels. Therefore, when there is another device state device around the printer 10, this device state device also receives a probe request signal from the printer 10 and transmits a probe response signal to the printer 10. However, the probe response signal from the device state device includes information indicating that the device state device is in the device state. A device in the client state (hereinafter referred to as the "client state device") does not transmit a probe response signal to the printer 10 even if the client state device receives a probe request signal from the printer 10. Therefore, by receiving probe response signals from devices around the printer 10 in the Scan process, the information obtaining unit 44 can appropriately find G/O state devices.

Next, in S14, the control unit 22 executes a Listen process. The Listen process is a process for responding to a probe request signal transmitted from another device state device that is executing a Search process (refer to S16), which will be described later. That is, upon receiving a probe request signal from the device state device, the control unit 22 transmits a probe response signal. The probe response signal from the printer 10 includes an IE and the MAC address of the printer 10. The IE includes information indicating that the printer 10 is in the device state and information indicating the device name and the category of the printer 10. Therefore, since the control unit 22 transmits the probe response signal in the Listen process, the device state device can find the printer 10 in the device state.

Next, in S16, the information obtaining unit 44 executes the Search process. The information obtaining unit 44 sequentially uses the three channels, namely the first, sixth, and eleventh channels, in order to sequentially transmit probe request signals. Therefore, the information obtaining unit 44 can wirelessly receive probe response signals from other device state devices. Each probe response signal from a device state device includes an IE and the MAC address of the device state device. The IE includes information indicating that the device state device is in the device state and information indicating the device name and the category of the device state device. Therefore, the information obtaining unit 44 analyzes probe response signals received in the Search process in order to find other device state devices around the printer 10 and obtain information regarding the device state devices that have been found.

Another G/O state device can also transmit a probe response signal to the printer 10 in response to a probe request signal transmitted in the Search process. However, the probe response signal includes information indicating that said another G/O state device is in the G/O state. As described above, a client state device does not transmit a probe response signal to the printer 10 even if the client state device receives a probe request signal from the printer 10. Therefore, by receiving probe response signals from devices around the printer 10 in the Search process, the information obtaining unit 44 can appropriately find device state devices.

Next, in S18, the control unit 22 causes the display unit 12 to display a device list. The device list includes the information regarding each device found in S12 and S16 (that is, the information indicating the state of each device and the device name, the category, and the MAC address of each device obtained in S12 and S16). In the example illustrated in Fig. 2, information (G/O state, printer, and MAC address) regarding a device corresponding to a device name "XXX" and information (device state, PC, and MAC address) regarding a device corresponding to a device name "YYY" are displayed on the display unit 12 in S18.

The user can recognize devices around the printer 10 by looking at the device list displayed in S18. The user can perform an operation for selecting a device through the operation unit 14 in order to select a device with which the printer 10 is to establish wireless connection. When the operation for selecting a device has been performed, the process proceeds to S20. It should be noted that a device (for example, the printer 70) selected by the operation for selecting a device will be referred to as the "target device" hereinafter.

In S20, the control unit 22 judges whether or not the target device is in the device state. If the target device selected by the user is in the device state (for example, if the device corresponding to the device name "YYY" illustrated in Fig. 2 is selected), the control unit 22 judges S20 to be YES, and the process proceeds to S22. On the other hand, if the target device is in the G/O state (for example, if the device corresponding to the device name "XXX" illustrated in Fig. 2 is selected by the user), the control unit 22 judges S20 to be NO, and the process proceeds to S24 without executing S22.

For example, if the method selected in S10 is the PIN code method, the control unit 22 generates a PIN code and causes the display unit 12 to display the PIN code at a timing between S20 and S22. In this case, the user inputs the PIN code displayed on the display unit 12 to the target device. Although an example in which a PIN code is displayed by the printer 10 and input to the target device has been described, a PIN code may be displayed by the target device and input to the printer 10. When the PIN code has been displayed and input, the control unit 22 executes a G/O negotiation with the target device in S22. As described above, a single wireless network invariably includes only one G/O state device. Therefore, by executing the G/O negotiation, the control unit 22 determines either the printer 10 in the device state or the target device in the device state to be a G/O and the other to be a client. On the other hand, for example, if the method selected in S10 is the PBC method, a PIN code is neither displayed nor input at a timing between S20 and S22. In this case, the control unit 22 executes a G/O negotiation with the target device in S22.

In the G/O negotiation executed in S22, the control unit 22 transmits information indicating the G/O priority of the printer 10 to the target device, as well as receiving information indicating the G/O priority of the target device from the target device. The G/O priority of the printer 10 is an index indicating how appropriate the printer 10 is for a G/O, and is predetermined in the printer 10. Similarly, the G/O priority of the target device is an index indicating how appropriate the target device is for a G/O. For example, a device having a CPU and a memory whose performance is relatively high (for example, a PC) can operate as a G/O while executing other processes at high speed. Therefore, the G/O priority of such a device is set such that the device is likely to be a G/O. On the other hand, for example, a device having a CPU and a memory whose performance is relatively low might not be able to operate as a G/O while executing other processes at high speed. Therefore, the G/O priority of such a device is set such that the device is not likely to be a G/O.

The control unit 22 compares the G/O priority of the printer 10 and the G/O priority that of the target device, and determines a device (the printer 10 or the target device) whose G/O priority is higher to be a G/O and a device (the target device or the printer 10) whose G/O priority is lower to be a client. The target device determines a G/O and a client using the same method as the printer 10 on the basis of the G/O priorities of the printer 10 and the target device.

In S22, the operation control unit 42 (refer to Fig. 1) switches the state of the printer 10 from the device state to a determined state (that is, the G/O state or the client state). The target device also switches from the device state to a determined state (that is, the client state or the G/O state). When the state of the printer 10 has been switched, the process proceeds to S24.

On the other hand, if the target device selected by the user is in the G/O state (for example, if the device corresponding to the device name "XXX" illustrated in Fig. 2 is selected), the control unit 22 judges S20 to be NO, and the process proceeds to S24 without executing S22. In this case, the G/O negotiation in S22 is not executed, and the control unit 22 determines the state of the printer 10 to be the client state and switches the state of the printer 10 from the device state to the client state. This is because the target device is in the G/O state and therefore it is preferable for the printer 10 to be in the client state and managed by the target device. For example, if the method selected in S10 is the PIN code method, a screen for displaying or inputting a PIN code is displayed at a timing between S20 and S24 when S20 has been judged to be NO. The control unit 22 then executes, in S22, provisioning discovery for notifying the target device of whether the own device (i.e. the printer 10 including the control unit 22) displays or inputs the PIN code. On the other hand, for example, if the method selected in S10 is the PBC method, the PIN code is neither displayed nor input at a timing between S20 and S24 when S20 has been judged to be NO, and the control unit 22 executes the provisioning discovery for notifying the target device of the use of the PBC method. When the provisioning discovery has been executed, the process proceeds to S24. If S20 has been judged to be YES, the control unit 22 executes a process corresponding to the provisioning discovery during the G/O negotiation in S22. Therefore, when S20 has been judged to be YES, the control unit 22 does not execute the process corresponding to the provisioning discovery as an independent process.

In S24, the control unit 22 of the printer 10 judges whether or not the current state of the own printer 10 is the G/O state. If S24 is judged to be YES (the current state of the printer 10 is the G/O state and the current state of the target device is the client state), the process proceeds to S26. On the other hand, if S24 is judged to be NO (the current state of the printer 10 is the client state and the current state of the target device is the G/O state), the process proceeds to S32.

In S26, the control unit 22 executes a WPS negotiation for the G/O state. For example, if the method selected in S10 is the PIN code method, the control unit 22 converts particular data (for example, latest packet data communicated between the printer 10 and the target device) into a hash code using the PIN code displayed by the printer 10 or input to the printer 10. On the other hand, the target device also converts particular data into a hash code using the PIN code input to the target device or displayed by the target device. Either the printer 10 (the control unit 22) or the target device then judges whether or not the hash code generated by the printer 10 and that generated by the target device match. If the method selected in S10 is the PBC method, for example, each of the printer 10 (the control unit 22) and the target device converts particular data into a hash code using a predetermined PIN code. In addition, either the printer 10 or the target device judges whether or not the two hash codes match. In this embodiment, a service set identifier (SSID), an authentication method, and an encryption method are determined in advance. In addition, the SSID and a password (network key) may be generated by the control unit 22 in the processing in S26 or may be determined in advance.

If the two hash codes match, that is, if the authentication of the PIN code is completed, the control unit 22 transmits the wireless profile to the target device. As a result, the printer 10 and the target device can use the same wireless profile.

Next, in S28, the control unit 22 executes a connection process in relation to the target device using the wireless profile. That is, the control unit 22 executes wireless communication of an authentication request, an authentication response, an association request, an association response, and a 4-way handshake with the target device using the wireless profile. In this process, the printer 10 and the target device execute various authentication processes such as confirmation of matching between passwords (network keys) thereof. When the matching between the passwords (network keys) has been confirmed and the authentication process has been completed, wireless connection is established between the printer 10 and the target device. Thus, a wireless network including the printer 10 and the target device is constructed. When the matching between the passwords (network keys) has been confirmed, a key to be utilized for encrypting in communication of target data is generated.

Next, in S30, the management unit 40 (refer to Fig. 1) registers the MAC address of the target device in the client state in the management list 36 in the memory 32. The MAC address of the target device is included in the probe response signal obtained in the Search process in S16. When S30 has been completed, the wireless connection process ends.

On the other hand, in S32, the control unit 22 executes a WPS negotiation for the client state. More specifically, the control unit 22 wirelessly receives a wireless profile (e.g. an SSID, an authentication method, an encryption method, a password) necessary to establish wireless connection from the target device. For example, if the method selected in S10 is the PIN code method, each of the printer 10 and the target device converts particular data into a hash code using the PIN code displayed by the printer 10 or input to the printer 10, and it is judged whether or not the two hash codes match. If the two hash codes match, the control unit 22 wirelessly receives the wireless profile from the target device. If the method selected in S10 is the PBC method, for example, each of the printer 10 and the target device converts particular data into a hash code using a predetermined PIN code, and it is judged whether or not the two hash codes match. If the two hash codes match, the control unit 22 wirelessly receives the wireless profile from the target device. As a result, the printer 10 and the target device can use the same wireless profile.

Next, in S34, the control unit 22 executes the connection process in relation to the target device using the wireless profile in the same manner as S28. As a result, wireless connection is established between the printer 10 and the target device. When S34 has been completed, the wireless connection process ends.

For example, if the printer 10 is in the G/O state, the printer 10 can now communicate target data (e.g. print data) to be communicated with the target device in the client state. The target data includes data in the network layer, which is a layer higher than the physical layer in the OSI reference model. Therefore, the printer 10 in the G/O state can execute wireless communication in the network layer with the target device in the client state. Furthermore, the printer 10 in the G/O state can now relay wireless communication between the target device in the client state and another device in the client state registered in the management list.

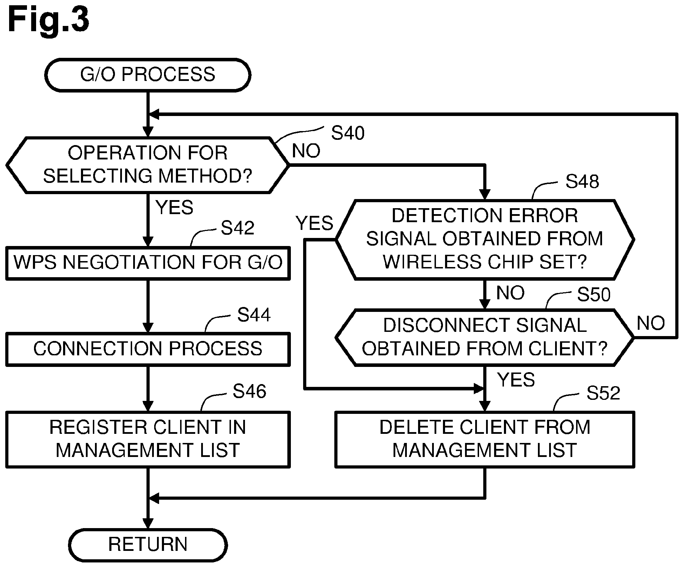

### (G/O Process: Fig. 3)

Next, a process to be executed when the printer 10 operates as a G/O will be described with reference to Fig. 3. In S40, the control unit 22 monitors whether or not an operation for selecting a method is performed, the operation being executed by the user using the operation unit 14. When the operation for selecting a method has been performed (YES in S40), the process proceeds to S42.

The user also performs the operation for selecting a method for a device (hereinafter referred to as the "target device") with which the printer 10 in the G/O state is to establish wireless connection. In this case, the target device can find the printer 10 in the Scan process and cause a display unit thereof to display a device list including the printer 10. If the user selects the printer 10 from the device list, the target device transmits a connection request to the printer 10. The connection request received from the target device includes various pieces of information such as the MAC address and the category of the target device. Thus, the information obtaining unit 44 of the printer 10 obtains various pieces of information regarding the target device. After transmitting the connection request to the printer 10, the target device switches to the client state. This is because the printer 10 is in the G/O state and therefore the target device cannot switch to the G/O state.

Upon receiving the connection request from the target device, the control unit 22 executes a WPS negotiation for the G/O state in S42 as in S26 illustrated in Fig. 2. As a result of the processing in S42, the printer 10 and the target device can use the same wireless profile. Next, in S44, the control unit 22 executes a connection process using the wireless profile as in S28 illustrated in Fig. 2. Next, in S46, the management unit 40 newly registers the MAC address of the target device in the client state in the management list 36 in the memory 32. The MAC address of the target device is included in the connection request received from the target device. When S46 has been completed, the process returns to S40.

In S48, the management unit 40 monitors whether or not a detection error signal is obtained from the wireless chip set 17 (refer to Fig. 1). A device in the client state (hereinafter referred to as the "client state device") registered in the management list 36 regularly transmits signals (hereinafter referred to as the "regular signals") to the printer 10 in the G/O state. The wireless chip set 17 receives the regular signals transmitted by the client state device. For example, when the mobile terminal 80 is the client state device, the mobile terminal 80 may move out of the range within which wireless communication with the printer 10 is possible. In addition, for example, wireless communication between the printer 10 and the client state device may be impossible due to a communication failure or the like. Further, for example, the power of the client state device may be turned off. In such cases, the wireless chip set 17 cannot receive the regular signals transmitted from the client state device. When a state in which the wireless chip set 17 cannot receive the regular signals from the client state device continues for a certain period, the wireless chip set 17 supplies a detection error signal to the management unit 40. The detection error signal includes the MAC address of the client state device whose regular signals cannot be detected. If the management unit 40 obtains the detection error signal (YES in S48), the process proceeds to S52. On the other hand, if the management unit 40 does not obtain the detection error signal (NO in S48), the process proceeds to S50.

In S50, the management unit 40 monitors whether or not a disconnect signal is obtained from a client state device. For example, if the user wants to remove a client state device from the wireless network, the user can perform a predetermined operation for the client state device. In this case, the client state device wirelessly transmits, to the printer 10 in the G/O state, a disconnect signal indicating that the client state device is being removed from the wireless network. The disconnect signal includes the MAC address of the client state device that has transmitted the disconnect signal. When the management unit 40 has obtained the disconnect signal (YES in S50), the process proceeds to S52.

In S52, the management unit 40 deletes the MAC address included in the detection error signal obtained in S48 or the MAC address included in the disconnect signal obtained in S50 from the management list 36. As a result of the deletion process in S52, the client state device removed from the wireless network is no longer a target to be managed by the management unit 40. Hereinafter, deleting a MAC address included in a detection error signal from the management list 36 by the management unit 40 will be expressed as "a client state device is removed from the wireless network due to a detection error". In addition, deleting a MAC address included in a disconnect signal from the management list 36 by the management unit 40 will be expressed as "a client state device is removed from the wireless network due to a disconnect signal". When S52 has been completed, the process returns to S40.

In this embodiment, when deleting the MAC address of a last client state device (hereinafter referred to as the "last client") from the management list 36 in S52, the management unit 40 causes a temporary storage area of the memory 32 to store the MAC address of the last client and the time (hereinafter referred to as the "last removal time") at which the MAC address of the last client is deleted. In particular, if the management unit 40 obtains a disconnect signal from the last client (YES in S50), the management unit 40 also causes the temporary storage area to store a flag indicating that the disconnect signal has been obtained. However, if the management unit 40 does not obtain a disconnect signal (if the last client is removed due to a detection error (YES in S48)), the management unit 40 does not cause the temporary storage area to store the flag.

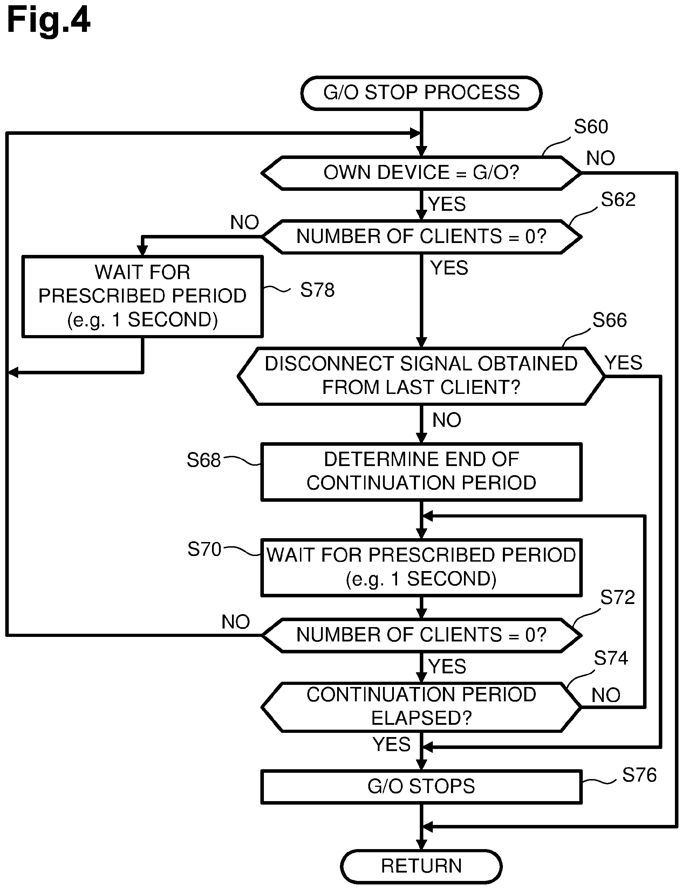

### (G/O Stop Process: Fig. 4)

Next, details of a G/O stop process executed by the printer 10 according to this embodiment will be described with reference to Fig. 4. First, in S60, the control unit 22 judges whether or not the current state of the own device (i.e. the printer 10 including the control unit 22) is the G/O state. If S60 is judged to be NO (if the printer 10 is in the device state or the client state), the control unit 22 does not execute the processing in S62 and subsequent steps. On the other hand, if S60 is judged to be YES (if the printer 10 is in the G/O state), the process proceeds to S62.

In S62, the management unit 40 judges whether or not the number of client state devices is 0. More specifically, the management unit 40 judges whether or not the total number of MAC addresses stored in the management list 36 is 0. If S62 is judged to be NO (i.e. if the total number of MAC addresses stored in the management list 36 is 1 or more), the process proceeds to S78. In S78, the management unit 40 waits for a prescribed time period (for example, 1 second), and then the process returns to S60.

On the other hand, if S62 is judged to be YES (i.e. if the number of MAC addresses stored in the management list 36 is 0), the process proceeds to S66. In S66, the management unit 40 judges whether or not a disconnect signal has been obtained from the last client. More specifically, in S66, the management unit 40 judges whether or not a flag indicating that a disconnect signal has been received is stored in the temporary storage area of the memory 32. If S66 is judged to be YES (i.e. if a flag indicating that a disconnect signals has been obtained is stored), the process proceeds to S76 without executing the processing in S68 through S74.

In S76, the operation control unit 42 switches the state of the printer 10 from the G/O state to the device state in order to stop the operation of the printer 10 as a G/O. That is, if S66 is judged to be YES, the operation control unit 42 immediately stops the operation of the printer 10 as a G/O in order not to execute the processing in S68 through S74. When the operation of the printer 10 as a G/O has been stopped, the wireless network that has worked is lost. Therefore, the printer 10 can no longer wirelessly communicate target data (e.g. print data) with other devices. In addition, the printer 10 can no longer relay wireless communication of target data between a plurality of devices in the client state. In S76, the operation control unit 42 discards the wireless profile (that is, the wireless profile transmitted in S26 illustrated in Fig. 2 or S42 illustrated in Fig. 3) that has been used in the wireless network. When S76 has been completed, the process returns to S60.

On the other hand, if S66 is judged to be NO (i.e. if a flag indicating that a disconnect signal has been obtained is not stored), the process proceeds to S68. In S68, the continuation period determination unit 46 (refer to Fig. 1) determines the end of a continuation period. More specifically, the continuation period determination unit 46 determines the end of the continuation period by adding a predetermined time period (for example, 1 minute) to the last removal time stored in the temporary storage area of the memory 32.

Next, in S70, the operation control unit 42 waits for a prescribed time period (for example, 1 second). Thereafter, in S72, the management unit 40 judges whether or not a state in which the number of clients is 0 is still continuing. The judgment process in S72 is similar to that in S62. If S72 is judged to be YES (i.e. if the number of clients is 0), the process proceeds to S74.

On the other hand, if S72 is judged to be NO (i.e. if the number of clients is 1 or more), the process returns to S60. An example of the state in which the number of clients becomes 1 or more is as follows: for example, suppose that a communication failure occurs between the printer 10 and the last client, and the last client is removed from the wireless network due to a detection error. Thereafter, the user performs the operation for selecting a method for the device that has been the last client and the printer 10. In this case, S40 illustrated in Fig. 3 is judged to be YES and, after S42 and S44, the device that has been the last client is registered in the management list 36 again (S46). Thus, the number of clients becomes 1 or more, and the S72 is judged to be NO.

In S74, the operation control unit 42 judges whether or not the continuation period, whose end has been determined in S68, has elapsed. If S74 is judged to be NO (i.e. if the continuation period has not elapsed yet), the process returns to S70. On the other hand, if S74 is judged to be YES (i.e. if the continuation period has elapsed), the process proceeds to S76.

In S76, the operation control unit 42 switches the state of the printer 10 from the G/O state to the device state in order to stop the operation of the printer 10 as a G/O. If S66 is judged to be NO, since the processing in S68 through S74 is executed, the operation control unit 42 does not immediately stop the operation of the printer 10 as a G/O even after the last client is removed. After the lapse of the continuation period, the operation control unit 42 stops the operation of the printer 10 as a G/O.

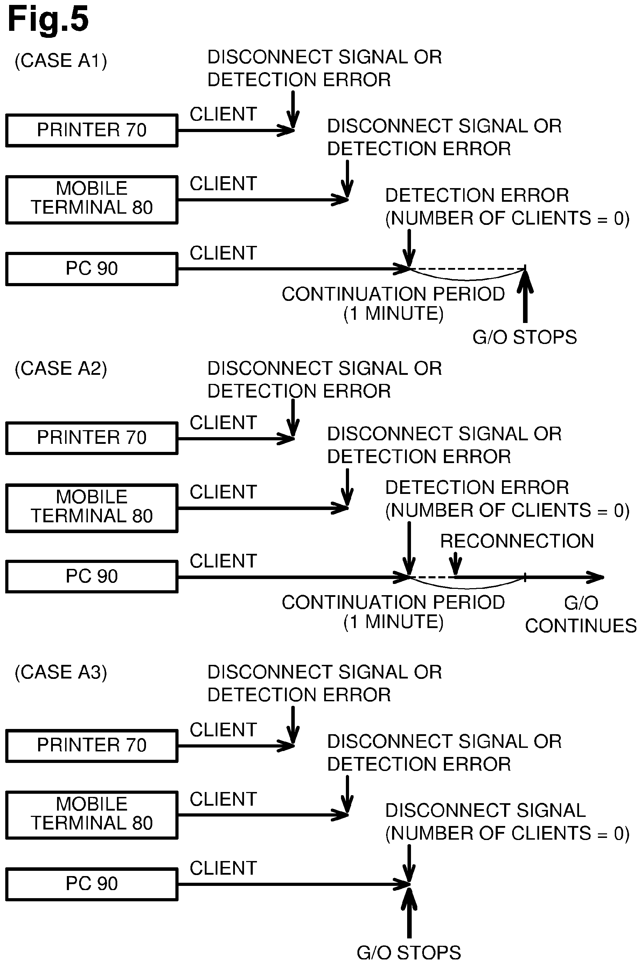

### (Specific Examples: Fig. 5)

Next, various cases in which the G/O stop process (refer to Fig. 4) is applied will be described with reference to Fig. 5. In Fig. 5, the printer 10 operates as a G/O, and the printer 70, the mobile terminal 80, and the PC 90 (refer to Fig. 1) operate as clients. Cases A1 to A3 will be sequentially described hereinafter.

### (Case A1)

The printer 70 is removed from the wireless network due to a disconnect signal or a detection error. The mobile terminal 80 is then removed from the wireless network due to a disconnect signal or a detection error. Therefore, in Case A1, the PC 90 is the last client. The PC 90 is removed from the wireless network due to a detection error (YES in S48 and the process proceeds to S52 illustrated in Fig. 3). At this time, the number of client devices (that is, the number of clients) managed by the printer 10 becomes 0 (YES in S62 illustrated in Fig. 4). As described above, the PC 90, which has been the last client, has been removed from the wireless network due to a detection error. Therefore, the printer 10 judges S66 illustrated in Fig. 4 to be NO, and determines the end of the continuation period (for example, 1 minute) (S68 illustrated in Fig. 4). The printer 10 continues the operation thereof as a G/O until the continuation period elapses. In Case A1, the number of clients remains 0 until the continuation period elapses. Therefore, the printer 10 switches the state thereof from the G/O state to the device state after the lapse of the continuation period, and stops the operation thereof as a G/O (S76 illustrated in Fig. 4).

### (Case A2)

In Case A2, as with Case A1, the printer 70 and the mobile terminal 80 are removed from the wireless network in this order. The PC 90, which is the last client, is removed from the wireless network due to a detection error, as in Case A1 (NO in S66 illustrated in Fig. 4). Therefore, the printer 10 determines the end of the continuation period (for example, 1 minute). In Case A2, wireless network is reestablished (reconnected) between the printer 10 and the PC 90 before the continuation period elapses. Therefore, the number of clients becomes 1 before the continuation period elapses (NO in S72). Therefore, the printer 10 continues the operation thereof as a G/O even after the lapse of the continuation period.

### (Case A3)

In Case A3, as with Case A1, the printer 70 and the mobile terminal 80 are removed from the wireless network in this order. The PC 90, which is the last client, is removed from the wireless network due to a disconnect signal (YES in S66 illustrated in Fig. 4). Therefore, the printer 10 immediately stops the operation thereof as a G/O in S76 without executing the processing in S68 through S74 illustrated in Fig. 4. That is, unlike Case A1, in which the printer 10 continues the operation thereof as a G/O until the continuation period elapses, the printer 10 stops the operation thereof as a G/O before the continuation period elapses.

### (Advantages Produced by First Embodiment)

The communication system 2 according to this embodiment has been described. When operating as a G/O, the printer 10 according to this embodiment continues, if the number of client state devices becomes 0 (YES in S62 illustrated in Fig. 4), the operation thereof as a G/O until the continuation period, which begins at the timing at which the number of client state devices becomes 0, elapses. If the number of client state devices becomes 1 or more before the continuation period elapses, the printer 10 continues the operation thereof as a G/O even after the lapse of the continuation period (refer to Case A2 in Fig. 5). If the number of client state devices remains 0 until the continuation period elapses, the printer 10 stops the operation thereof as a G/O in the wireless network upon the lapse of the continuation period (refer to Case A1 in Fig. 5). As a result, for example, the printer 10 need not construct the wireless network again immediately after the wireless network is lost.

For example, suppose that a mobile device (e.g. the mobile terminal 80) is a client state device. In this case, when carried, the mobile device can be removed from the wireless network due to a detection error. According to the configuration according to this embodiment, in such a case, the printer 10 does not immediately stop the operation thereof as a G/O, and continues the operation thereof as a G/O until the continuation period elapses. Therefore, if the mobile device is reconnected to the wireless network before the continuation period elapses, it is sufficient for the printer 10 to execute the processing in S42 through S46 illustrated in Fig. 3. That is, the printer 10 need not execute the processing in S12 through S22 illustrated in Fig. 2. For this reason, the processing load of the printer 10 can be reduced. That is, the printer 10 can appropriately execute the operation thereof as a G/O.

As described above, in this embodiment, when a disconnect signal has been obtained from the last client, the printer 10 immediately stops the operation thereof as a G/O without providing the continuation period (refer to Case A3 in Fig. 5). When a disconnect signal is obtained from the last client, a user of the last client desires to remove the last client from the wireless network. Therefore, in such a case, the printer 10 immediately stops the operation thereof as a G/O because it is unlikely that the last client will be connected to the wireless network again. As a result, the printer 10 can stop the operation thereof as a G/O at early time point, thereby reducing the processing load (the load of the processing as a G/O) of the printer 10. That is, in this embodiment, the printer 10 determines whether or not to provide the continuation period in accordance with whether or not a disconnect signal has been obtained from the last client. Therefore, the printer 10 can appropriately stop the operation thereof as a G/O in accordance with whether or not a disconnect signal has been obtained from the last client.

It should be noted that the printer 10 is an example of a "wireless communication apparatus". A G/O and a client are examples of a "master station" and a "remote station", respectively. A client state device is an example of a "remote device". YES in S62 and NO in S66 illustrated in Fig. 4 is an example of a "first case". YES in S62 and YES in S66 illustrated in Fig. 4 is an example of a "second case". The last client is an example of a "last removed remote device".

### (Second Embodiment)

Differences of a second embodiment from the first embodiment will be mainly described. In the second embodiment, a holding period table 38 is stored in the memory 32 (refer to the broken-line portion in Fig. 1). The holding period table 38 stores the categories (printer, PC, mobile terminal, and the like) of devices and the periods (1 minute, 2 minutes, and the like) associated with each other. The categories of devices stored in the holding period table 38 include, in addition to the above-mentioned printer, PC, and mobile terminal, television set, game machine, digital camera, router, and scanner. In this embodiment, a different period is associated with each category of devices in the holding period table 38.

In the case of a mobile device (e.g. a mobile terminal), it is likely that the mobile device is temporarily moved out of the range within which the wireless communication of the printer 10 is possible, and then returns to the range within which the wireless communication of the printer 10 is possible. In the holding period table 38, a relatively long period is associated with such a category of devices. On the other hand, for example, in the case of a stationary device (e.g. a printer, a desktop PC), it is unlikely that the stationary device returns to the range within which the wireless communication of the printer 10 is possible once the stationary device moves out of the range within which the wireless communication of the printer 10 is possible. In the holding period table 38, a relatively short period is associated with such a category of devices.

In this embodiment, in S30 of Fig. 2, the management unit 40 registers, in the management list 36 in the memory 32, the MAC address of a target device in the client state and the category of the target device while associating the MAC address and the category with each other. If S48 illustrated in Fig. 3 is judged to be YES (i.e. if the last client is removed due to a detection error), the management unit 40 deletes the MAC address and the category of the last client from the management list 36 in S52. At this time, the management unit 40 stores the category of the last client in the temporary storage area of the memory 32.

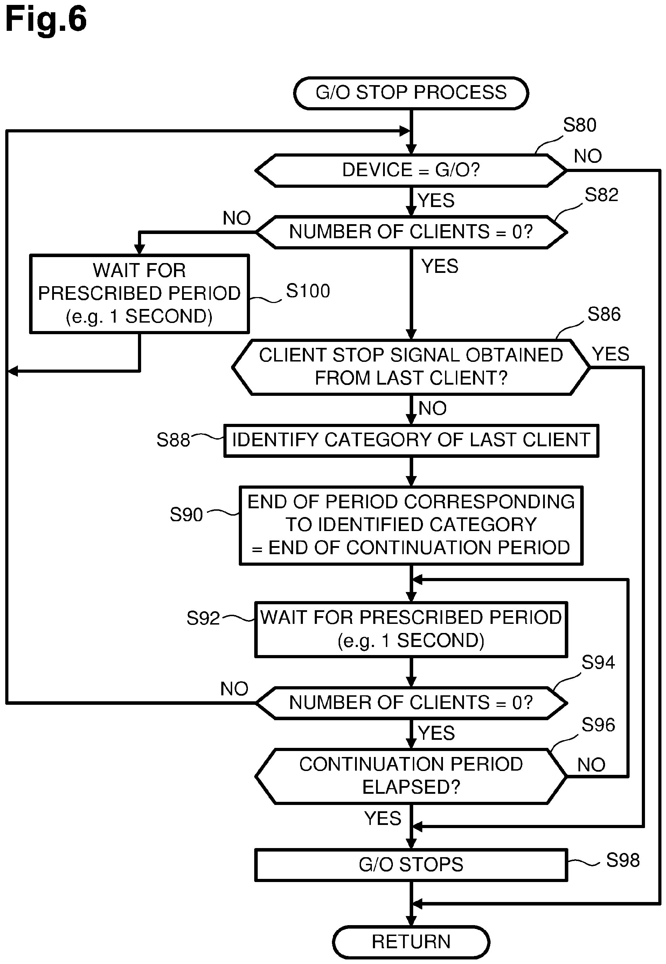

### (G/O Stop Process: Fig. 6)

Details of a G/O stop process according to the second embodiment will be described with reference to Fig. 6. Processing in S80 through S86 of Fig. 6 is similar to that in S60 through S66 of Fig. 4. In addition, processing in S100 of Fig. 6 is similar to that in S78 of Fig. 4.

In S88 (i.e. if the last client is removed due to a detection error), the management unit 40 identifies the category of the last client from the temporary storage area of the memory 32. Next, in S90, the continuation period determination unit 46 determines the end of the continuation period on the basis of the period corresponding to the category identified in S88. More specifically, in S90, the continuation period determination unit 46 first identifies the period corresponding to the category identified in S88 from the holding period table 38. Next, the continuation period determination unit 46 determines the end of the continuation period by adding the identified period to the last removal time stored in the temporary storage area of the memory 32. When S90 has been completed, the process proceeds to S92. Processing in S92 through S98 is the similar to that in S70 to S76 of Fig. 4. When S98 has been completed, the process returns to S80.

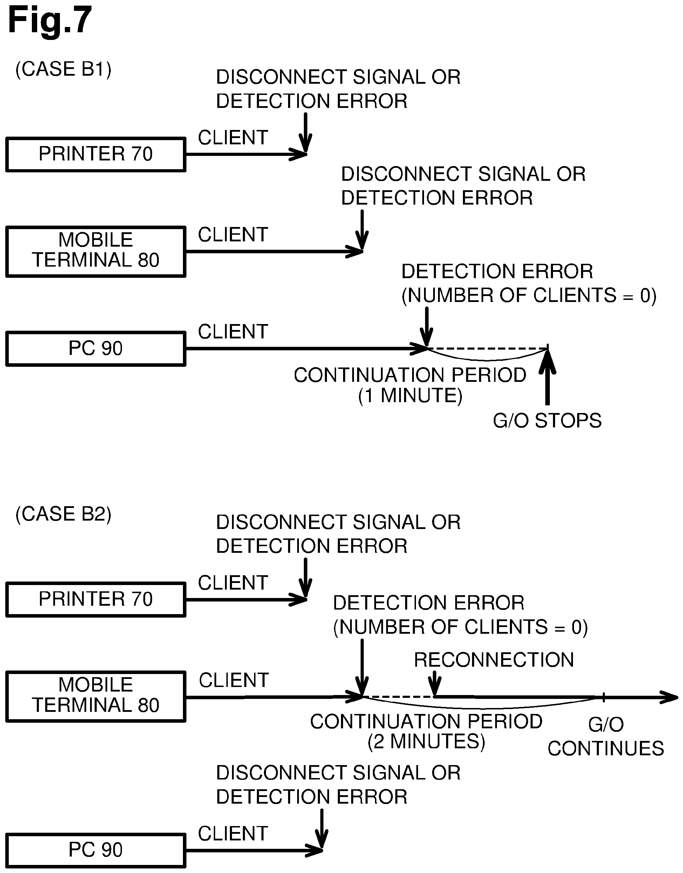

### (Specific Examples: Fig. 7)

Next, various cases in which the G/O stop process (refer to Fig. 6) is applied will be described with reference to Fig. 7.

### (Case B1)

The PC 90 (for example, a desktop PC), which is the last client, is removed from the wireless network due to a detection error. At this time, the number of clients becomes 0 (YES in S82 illustrated in Fig. 6). The printer 10 identifies the category "PC" of the PC 90, which is the last client (S88). Next, the printer 10 determines the end of the continuation period by adding the period "1 minute" corresponding to the identified category "PC" to the last removal time of the PC 90 (S90). After the lapse of the continuation period, the printer 10 switches the state thereof from the G/O state to the device state, in order to stop the operation thereof as a G/O (S98).

As described above, in the holding period table 38, a relatively short period is associated with the category of a stationary device such as a desktop PC. Therefore, a relatively short period (1 minute) is adopted in Case B1. This is because it is unlikely that a stationary device returns to the range within which the wireless communication of the printer 10 is possible once the stationary device moves out of the range within which the wireless communication of the printer 10 is possible. Therefore, the printer 10 can stop the operation thereof as a master station at early time point, thereby reducing the processing load of the printer 10.

### (Case B2)

In Case B2, unlike Case B1, the printer 70 and the PC 90 are removed from the wireless network in this order. The mobile terminal 80, which is the last client, is removed from the wireless network due to a detection error. The printer 10 identifies the category "mobile terminal" of the mobile terminal 80, which is the last client (S88 of Fig. 6). Next, the printer 10 determines the end of the continuation period by adding the period "2 minutes" corresponding to the identified category "mobile terminal" to the last removal time of the mobile terminal 80 (S90). In Case B2, wireless connection is reestablished (reconnected) between the printer 10 and the mobile terminal 80 before the continuation period elapses. Therefore, the number of clients becomes 1 before the continuation period elapses (NO in S94). Therefore, the printer 10 continues the operation thereof as a G/O even after the lapse of the continuation period.

As described above, in the holding period table 38, a relatively long period is associated with the category of a mobile device such as a mobile terminal. Therefore, a relatively long period (2 minutes) is adopted in Case B2. This is because it is likely that a mobile device returns to the range within which the wireless communication of the printer 10 is possible after the mobile device moves out of the range within which the wireless communication of the printer 10 is possible. Therefore, when the mobile device returns to the range within which the wireless communication of the printer 10 is possible, the printer 10 can appropriately continue the operation thereof as a master station.

### (Third Embodiment)

Differences of a third embodiment from the first embodiment will be mainly described. In the third embodiment, the holding period table 38 is also stored in the memory 32 as in the second embodiment.

In the third embodiment, each time the management unit 40 deletes the MAC address of a client state device from the management list 36 in S52 illustrated in Fig. 3, the management unit 40 stores, in the temporary storage area of the memory 32, the MAC address of the client state device (hereinafter referred to as the "removed client"), the category of the removed client, and the time (hereinafter referred to as the "removal time") at which the MAC address of the removed client is removed, while associating these pieces of information with one another. In this case, if a disconnect signal is obtained from the removed client (YES in S50 illustrated in Fig. 3), the management unit 40 further stores a flag indicating that a disconnect signal has been obtained in the temporary storage area of the memory 32, while associating the flag with the above pieces of information (e.g. the MAC address).

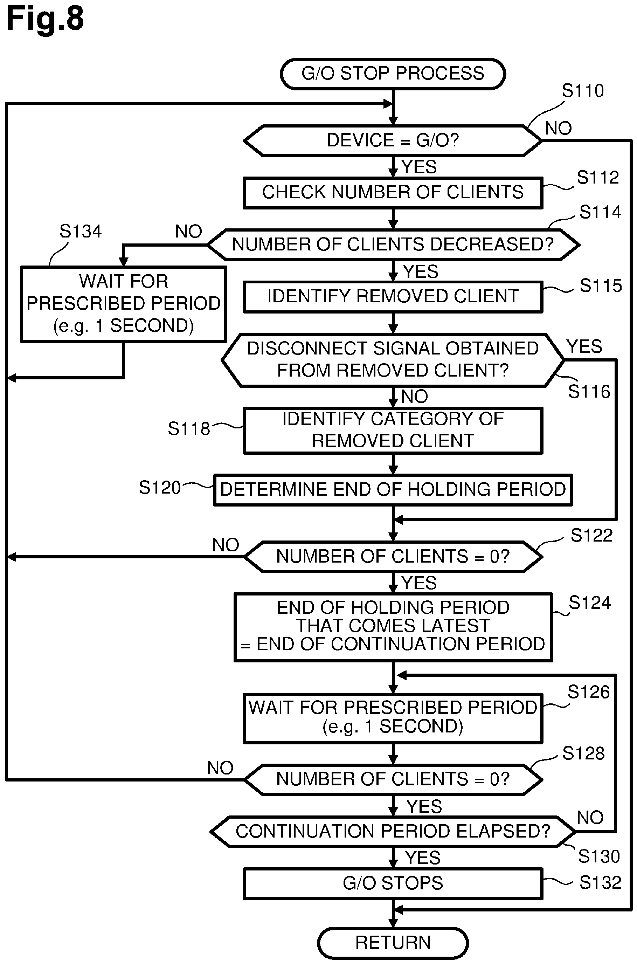

### (G/O Stop Process: Fig. 8)

Details of a G/O stop process according to the third embodiment will be described with reference to Fig. 8. Processing in S110 is similar to that in S60 of Fig. 4. In S112, the management unit 40 checks the number of client state devices. Specifically, the management unit 40 checks the number of MAC addresses stored in the management list 36. Next, in S114, the management unit 40 judges whether or not the number of client state devices has decreased. Specifically, the management unit 40 compares the number of client state devices in the previous judgment (previous S112) and the number of client state devices in the current judgment, in order to judge whether or not the current number of client state devices is smaller than the previous number of client state devices. If S114 is judged to be NO (i.e. if the number of client state devices has not decreased), the process proceeds to S134. Processing in S134 is similar to that in S78 of Fig. 4.

On the other hand, if S114 is judged to be YES (i.e. if the number of client state devices has decreased), the management unit 40 identifies a removed client state device in S115. Specifically, the management unit 40 refers to information regarding removed clients stored in the temporary storage area of the memory 32 and identifies a MAC address (hereinafter referred to as the "latest removed client") corresponding to the latest removal time.

Next, in S116, the management unit 40 judges whether or not a disconnect signal has been obtained from the latest removed client. Specifically, the management unit 40 refers to the temporary storage area of the memory 32 and judges whether or not a flag indicating that a disconnect signal has been obtained is associated with the MAC address identified in S115. If S116 is judged to be YES (i.e. if a disconnect signal has been obtained), the process proceeds to S122 without executing processing in S118 and S120 (that is, without determining a holding period using the holding period determination unit 48 (refer to Fig. 1)). On the other hand, if S116 is judged to be NO (if a disconnect signal has not been obtained), the process to S118.

In S118, the holding period determination unit 48 identifies a category corresponding to the MAC address identified in S115 from the temporary storage area of the memory 32. Next, in S120, the holding period determination unit 48 determines the end of a holding period corresponding to the category identified in S118. Specifically, in S120, the holding period determination unit 48 first identifies a period corresponding to the category identified in S118 from the holding period table 38. Next, the holding period determination unit 48 determines the end of the holding period by adding the identified period (for example, 1 minute) to the removal time of the latest removed client.

Next, in S122, the management unit 40 judges whether or not the number of clients is 0. Processing in S122 is similar to that in S62 of Fig. 4. If S122 is judged to be YES (i.e. if the number of clients is 0), the continuation period determination unit 46 determines the end of the continuation period in S124. Specifically, the continuation period determination unit 46 determines the end of one of one or more holding periods determined in S120 that comes the latest to be the end of the continuation period. Processing in S126 through S132 is similar to that in S70 through S76 of Fig. 4.

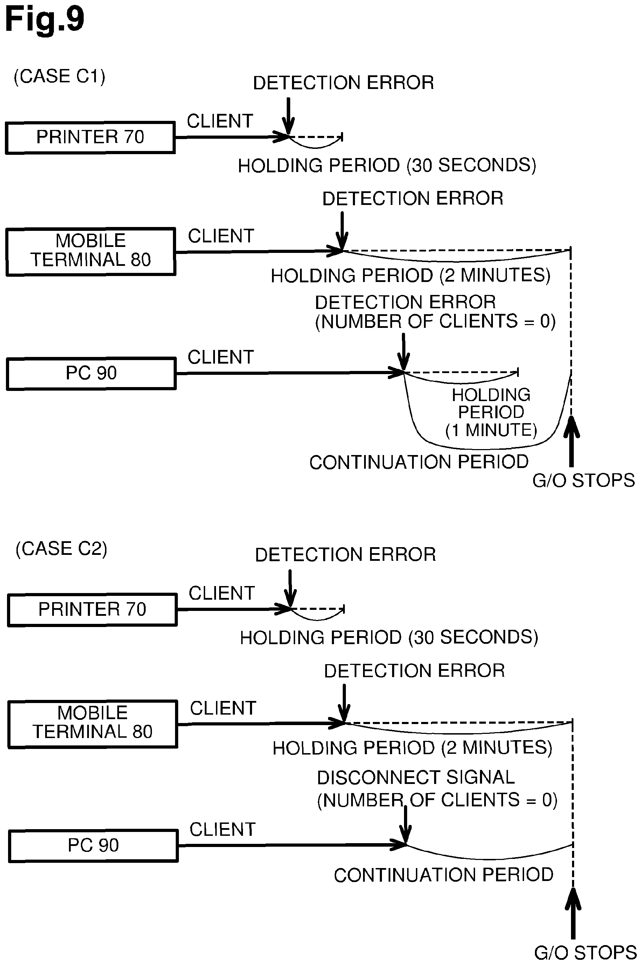

### (Specific Examples: Fig. 9)

Next, various cases in which the G/O stop process (refer to Fig. 8) is applied will be described with reference to Fig. 9.

### (Case C1)

In Case C1, first, the printer 70 is removed from the wireless network due to a detection error. In this case, the printer 10 refers to the holding period table 38 and identifies the period "30 seconds" corresponding to the category "printer" (S120 in Fig. 8). Next, the printer 10 determines the end of the holding period by adding the identified period (30 seconds) to the removal time of the printer 70 (S120 in Fig. 8). Next, the mobile terminal 80 is removed from the wireless network due to a detection error. In this case, the printer 10 identifies the period "2 minutes" corresponding to the category "mobile terminal" and determines the end of the holding period (S120). Next, the PC 90, which is the last client, is removed from the wireless network due to a detection error. In this case, the printer 10 identifies the period "1 minute" corresponding to the category "PC" as the holding period in the same manner as above, and determines the end of the holding period (S120 in Fig. 8). The printer 10 then determines the end of the holding period of the mobile terminal 80, which comes the latest among the three holding periods that have been determined, to be the end of the continuation period (S124). After the lapse of the continuation period, the printer 10 switches the state thereof from the G/O state to the device state in order to stop the operation thereof as a G/O (S132).

### (Case C2)

In Case C2, as with Case C1, the printer 70 and the mobile terminal 80 are removed from the wireless network in this order due to detection errors. In the same manner as above, the printer 10 determines the end of the holding period for each of the printer 70 and the mobile terminal 80 (S120 in Fig. 8). In Case C2, next, the PC 90, which is the last client, is removed from the wireless network due to a disconnect signal. In this case, the printer 10 does not determine the end of the holding period (YES in S116). Therefore, the printer 10 determines the end of the holding period of the mobile terminal 80, which comes later than the other between the two holding periods that have been determined, to be the end of the continuation period (S124).

As described above, the printer 10 determines the end of the continuation period on the basis of holding periods determined for two or more removed clients. In addition, the duration of a holding period to be determined changes in accordance with the category of a removed client. Therefore, in the third embodiment, the printer 10 can determine the end of the continuation period on the basis of one or more categories of one or more removed clients. That is, the printer 10 can stop the operation thereof as a G/O at an appropriate timing in accordance with the categories of the one or more removed clients. As described above, if a disconnect signal is obtained from a removed client (YES in S116), the printer 10 does not determine the holding period on the basis of the category of the removed client. That is, the printer 10 can determine an appropriate continuation period in accordance with whether or not a disconnect signal has been obtained from the removed client. As a result, the printer 10 can stop the operation thereof as a master station at an appropriate timing.

### (Fourth Embodiment)

Differences of a fourth embodiment from the third embodiment will be mainly described. In the fourth embodiment, unlike the third embodiment, the holding period table 38 is not stored in the memory 32. In the fourth embodiment, S118 of Fig. 8 is not executed. In S120 of Fig. 8, the holding period determination unit 48 identifies a predetermined period (for example, 1 minute) as the holding period regardless of the category of a removed client, and determines the end of the holding period. As with the third embodiment, if the disconnect signal is obtained from a removed client (YES in S116 of Fig. 8), the holding period determination unit 48 does not determine the end of the holding period.

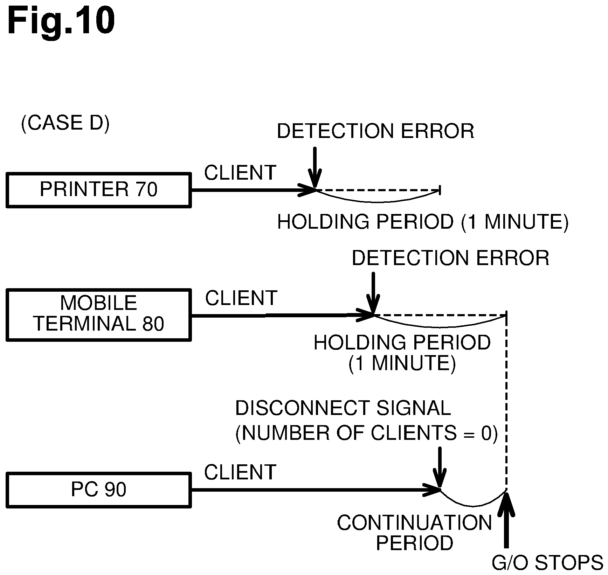

### (Specific Example: Fig. 10)

Next, a case in which the G/O stop process is applied will be described with reference to Fig. 10.

### (Case D)

In Case D, first, the printer 70 is removed from the wireless network due to a detection error. In this case, the printer 10 identifies a predetermined period "1 minute" as the holding period, and determines the end of the holding period. Next, the mobile terminal 80 is removed from the wireless network due to a detection error. In this case, too, the printer 10 identifies the predetermined period "1 minute" as the holding period, and determines the end of the holding period. Next, the PC 90, which is the last client, is removed from the wireless network due to a disconnect signal. In this case, the printer 10 does not determine the end of the holding period. Therefore, the printer 10 determines the end of the holding period of the mobile terminal 80, which comes later than the other between the two holding periods that have been determined, to be the end of the continuation period.

As described above, in the fourth embodiment, the printer 10 determines or does not determine the holding period in accordance with whether or not a disconnect signal has been obtained from a removed client. Therefore, the printer 10 can stop the operation thereof as G/O at an appropriate timing in accordance with whether or not a disconnect signal has been obtained from the removed client.

### (Modifications)

The invention may not be limited to the above-described embodiments, but may be implemented in various forms with various modifications without departing from the scope and spirit of the invention. Although not a comprehensive listing of modifications, several exemplary modifications are described hereafter.

### (First Modification)

In the first and second embodiments, if a disconnect signal is obtained from the last client, the continuation period determination unit 46 does not determine the continuation period (S68 is not executed if S66 of Fig. 4 is judged to be YES). In this case, the operation control unit 42 stops the operation of the printer 10 as a G/O immediately after the last client is removed (S76 in Fig. 4). Alternatively, even if a disconnect signal is obtained from the last client, the continuation period determination unit 46 may determine the continuation period. In general, in the first case where the number of remote devices to be managed becomes 0, the operation control unit 42 may continue the operation of the printer 10 as a master station until the continuation period, which begins at the timing at which the number of remote devices becomes 0, elapses.

### (Second Modification)

In the third and fourth embodiments, if a disconnect signal is obtained from a removed client, the holding period determination unit 48 does not determine the holding period. Alternatively, even if a disconnect signal is obtained from a removed client, the holding period determination unit 48 may determine the holding period. "first-type remote devices" may include both a remote device that is removed by supplying a disconnect signal and a remote device that is removed without supplying a disconnect signal.

### (Third Modification)

A "wireless communication apparatus" is not limited to the printer 10, and may be another device capable of executing wireless communication (for example, a cell phone, a personal digital assistant (PDA), a PC, a server, a fax machine, a copying machine, a scanner, a multifunction device).

### (Fourth Modification)

In the above embodiments, the wireless chip set 17 supplies a detection error signal to the management unit 40 when a state in which the regular signals cannot be received from a client state device continues for a predetermined time period (a detection error). Alternatively, when data (e.g. print data) is to be transmitted to a target client state device, the wireless chip set 17 may supply a detection error signal to the management unit 40 if the transmission of the data is not completed even after a certain number of trials.

### (Fifth Modification)

In the above embodiments, the components 40 through 48 are realized by the CPU 30 of the printer 10 by executing the processing in accordance with software. Alternatively, at least some of the components 40 through 48 may be realized by hardware such as a logic circuit.

While the invention has been described in connection with various example structures and illustrative embodiments, it will be understood by those skilled in the art that other variations and modifications of the structures, configurations, and embodiments described above may be made without departing from the scope of the invention. For example, this application comprises any possible combination of the various elements and features disclosed herein, and the particular elements and features presented in the claims and disclosed above may be combined with each other in other ways within the scope of the application, such that the application should be recognized as also directed to other embodiments comprising any other possible combinations. Other structures, configurations, and embodiments will be apparent to those skilled in the art from a consideration of the specification or practice of the invention disclosed herein. It is intended that the specification and the described examples are illustrative with the true scope of the invention being defined by the following claims.

## Claims

1. A wireless communication apparatus (10, 70, 80, 90) capable of selectively operating as a group owner or a client in a Wi-Fi Direct wireless network, comprising:
a control unit (42) configured to perform group owner negotiation so as to determine whether the wireless communication apparatus operates as a group owner or a client in a particular Wi-Fi Direct wireless network;
a management unit (40) configured to, when the wireless communication apparatus operates as the group owner in the particular Wi-Fi Direct wireless network, manage one or more remote devices that operate as clients in the particular Wi-Fi Direct wireless network; and
an operation control unit (42) configured to, when the wireless communication apparatus operates as the group owner in the particular Wi-Fi Direct wireless network, continue the operation of the wireless communication apparatus as the group owner until a continuation period elapses in a first case where the number of remote devices to be managed becomes 0, wherein the continuation period begins at a timing at which the number of remote devices to be managed becomes 0,
wherein, if the number of remote devices to be managed becomes 1 or more before the continuation period elapses, the operation control unit is configured to continue the operation of the wireless communication apparatus as the group owner in the particular Wi-Fi Direct wireless network even after a lapse of the continuation period, and
wherein, if the number of remote devices to be managed remains 0 until the continuation period elapses, the operation control unit is configured to stop the operation of the wireless communication apparatus as the group owner after the lapse of the continuation period.

2. The wireless communication apparatus according to Claim 1,
wherein, in the first case where the number of remote devices to be managed becomes 0 without obtaining a disconnect signal from a last removed remote device, which is a last device that has been removed from the particular Wi-Fi Direct network among the one or more remote devices to be managed, the operation control unit is configured to continue the operation of the wireless communication apparatus as the group owner until the continuation period elapses, and
wherein, in a second case where the number of remote devices to be managed becomes 0 while the disconnect signal is obtained from the last removed remote device, the operation control unit is configured to stop the operation of the wireless communication apparatus as the group owner before the continuation period elapses.

3. The wireless communication apparatus according to Claim 1,
wherein the operation control unit comprises:
a holding period determination unit (48) configured to, each time a first-type remote device among the one or more remote devices to be managed is removed from the particular Wi-Fi Direct wireless network, determine a holding period that begins at a timing at which the first-type remote device is removed from the particular Wi-Fi Direct wireless network, and is further configured, if a second-type remote device among the one or more remote devices to be managed is removed from the particular Wi-Fi Direct wireless network, to not determine the holding period; and
a continuation period determination unit (46) configured to, in the first case where the number of remote devices to be managed becomes 0, determine an end of one of one or more holding periods determined by the holding period determination unit that comes the latest as an end of the continuation period,
wherein the first-type remote device is a remote device that is removed from the particular Wi-Fi Direct wireless network without supplying a disconnect signal to the wireless communication apparatus, and
wherein the second-type remote device is a remote device that is removed from the particular Wi-Fi Direct wireless network by supplying the disconnect signal to the wireless communication apparatus.

4. The wireless communication apparatus according to Claim 1 or 2,
wherein the operation control unit comprises:
an information obtaining unit (44) configured to obtain, from each of the one or more remote devices to be managed, category information indicating a category of each of the one or more remote devices to be managed; and
a continuation period determination unit (46) configured to determine an end of the continuation period on the basis of at least one of one or more pieces of the category information obtained from the one or more remote devices to be managed.

5. The wireless communication apparatus according to Claim 4,
wherein, in the first case where the number of remote devices to be managed becomes 0, the continuation period determination unit is configured to determine the end of the continuation period on the basis of only one piece of the category information obtained from a last removed remote device, which is a last device that has been removed from the particular Wi-Fi Direct wireless network among the one or more remote devices to be managed.

6. The wireless communication apparatus according to Claim 4 or 5, further comprising:
a memory (32) configured to store a plurality of pieces of the category information and a plurality of periods, while associating each piece of the category information with one of said plurality of periods based on the category information,
wherein the continuation period determination unit is configured to determine the end of the continuation period on the basis of said one of said plurality of periods associated with a piece of the category information obtained from the last removed remote device.

7. The wireless communication apparatus according to Claim 4,
wherein the operation control unit further comprises:
a holding period determination unit (48) configured to, each time a first-type remote device among the one or more remote devices to be managed is removed from the particular Wi-Fi Direct wireless network, determine a holding period on the basis of a piece of the category information obtained from the first-type remote device, wherein the holding period begins at a timing at which the first-type remote device is removed from the particular Wi-Fi Direct wireless network,
wherein, in the first case where the number of remote devices to be managed becomes 0, the holding period determination unit is configured to determine an end of one of one or more holding periods determined by the holding period determination unit that comes the latest as the end of the continuation period.

8. The wireless communication apparatus according to Claim 7,
wherein, if a second-type remote device among the one or more remote devices to be managed is removed from the particular Wi-Fi Direct wireless network, the holding period determination unit is configured not to determine the holding period,
wherein the first-type remote device is a remote device that is removed from the particular Wi-Fi Direct wireless network without supplying a disconnect signal to the wireless communication apparatus, and
wherein the second-type remote device is a remote device that is removed from the particular Wi-Fi Direct wireless network by supplying the disconnect signal to the wireless communication apparatus.

9. The wireless communication apparatus according to Claim 7 or 8, further comprising:
a memory (32) configured to store a plurality of pieces of the category information and corresponding periods while associating each piece of the category information with each period,
wherein, each time the first-type remote device is removed from the particular Wi-Fi Direct wireless network, the holding period determination unit is configured to determine an end of the holding period on the basis of a period associated with a piece of the category information obtained from the first-type remote device.

10. A computer-readable storage medium comprising computer-readable instructions for a processor of a wireless communication apparatus capable of selectively operating as a group owner or a client in a Wi-Fi Direct wireless network, the computer-readable instructions instructing the processor to perform the steps of:
performing a group owner negotiation (S22) so as to determine whether the wireless communication apparatus operates as a group owner or a client in a particular Wi-Fi Direct wireless network
managing, when the wireless communication apparatus operates as the group owner in the particular Wi-Fi Direct wireless network, one or more remote devices that operate as clients in the particular Wi-Fi Direct wireless network; and
controlling, when the wireless communication apparatus operates as the group owner in the particular Wi-Fi Direct wireless network, to continue the operation of the wireless communication apparatus as the group owner until a continuation period elapses in a first case where the number of remote devices to be managed becomes 0, wherein the continuation period begins at a timing at which the number of remote devices to be managed becomes 0,
wherein the controlling step includes continuing the operation of the wireless communication apparatus as the group owner in the particular Wi-Fi Direct wireless network even after a lapse of the continuation period if the number of remote devices to be managed becomes 1 or more before the continuation period elapses, and
wherein the controlling step includes stopping the operation of the wireless communication apparatus as the group owner after the lapse of the continuation period if the number of remote devices to be managed remains 0 until the continuation period elapses.

## Patentansprüche

1. Drahtlose Kommunikationsvorrichtung (10, 70, 80, 90), die in der Lage ist, selektiv als ein Gruppenbesitzer oder ein Client in einem drahtlosen WiFi-Direct-Netzwerk betrieben zu werden, umfassend:
eine Steuereinheit (42), die konfiguriert ist, um eine Gruppenbesitzer-Vermittlung auszuführen, um zu bestimmen, ob die drahtlose Kommunikationsvorrichtung als ein Gruppenbesitzer oder ein Client in einem bestimmten drahtlosen WiFi-Direct-Netzwerk betrieben wird;
eine Verwaltungseinheit (40), die konfiguriert ist, um, wenn die drahtlose Kommunikationsvorrichtung als der Gruppenbesitzer in dem bestimmten drahtlosen WiFi-Direct-Netzwerk betrieben wird, ein oder mehrere Remote-Geräte zu verwalten, die als Clients in dem bestimmten drahtlosen WiFi-Direct-Netzwerk betrieben werden; und
eine Betriebssteuereinheit (42), die konfiguriert ist, um, wenn die drahtlose Kommunikationsvorrichtung als der Gruppenbesitzer in dem bestimmten drahtlosen WiFi-Direct-Netzwerk betrieben wird, den Betrieb der drahtlosen Kommunikationsvorrichtung als der Gruppenbesitzer fortzuführen, bis ein Fortführungszeitraum abläuft, in einem ersten Fall, in dem die Anzahl an Remote-Geräten, die verwaltet werden sollen, 0 wird, wobei der Fortführungszeitraum an einem Zeitpunkt beginnt, an dem die Anzahl an zu verwaltenden Remote-Geräten 0 wird,
wobei, wenn die Anzahl an Remote-Geräten, die verwaltet werden sollen, 1 oder mehr wird, bevor der Fortführungszeitraum abläuft, die Betriebssteuereinheit konfiguriert ist, um den Betrieb der drahtlosen Kommunikationsvorrichtung als der Gruppenbesitzer in dem bestimmten drahtlosen WiFi-Direct-Netzwerk selbst nach einem Ablauf des Fortführungszeitraums fortzuführen, und
wobei, wenn die Anzahl an Remote-Geräten, die verwaltet werden sollen, 0 bleibt, bis der Fortführungszeitraum abläuft, die Betriebssteuereinheit konfiguriert ist, um den Betrieb der drahtlosen Kommunikationsvorrichtung als der Gruppenbesitzer nach dem Ablauf des Fortführungszeitraums zu stoppen.

2. Drahtlose Kommunikationsvorrichtung nach Anspruch 1,
wobei in dem ersten Fall, in dem die Anzahl an Remote-Geräten, die verwaltet werden sollen, 0 wird, ohne ein Trennsignal von einem zuletzt getrennten Remote-Gerät zu erhalten, das ein letztes Gerät ist, das von dem bestimmten WiFi-Direct-Netzwerk unter dem einen oder den mehreren Remote-Geräten, die verwaltet werden sollen, getrennt wurde, die Betriebssteuereinheit konfiguriert ist, um den Betrieb der drahtlosen Kommunikationsvorrichtung als der Gruppenbesitzer fortzuführen, bis der Fortführungszeitraum abläuft, und
wobei in einem zweiten Fall, in dem die Anzahl an Remote-Geräten, die verwaltet werden sollen, 0 wird, während das Trennsignal von dem zuletzt getrennten Remote-Gerät erhalten wird, die Betriebssteuereinheit konfiguriert ist, um den Betrieb der drahtlosen Kommunikationsvorrichtung als der Gruppenbesitzer zu stoppen, bevor der Fortführungszeitraum abläuft.

3. Drahtlose Kommunikationsvorrichtung nach Anspruch 1,
wobei die Betriebssteuereinheit Folgendes umfasst:
eine Haltezeitraum-Bestimmungseinheit (48), die konfiguriert ist, um jedes Mal, wenn ein Remote-Gerät eines ersten Typs unter dem einen oder den mehreren Remote-Geräten, die verwaltet werden sollen, von dem bestimmten drahtlosen WiFi-Direct-Netzwerk getrennt wird, einen Haltezeitraum zu bestimmen, der an einem Zeitpunkt beginnt, an dem das Remote-Gerät eines ersten Typs von dem bestimmten drahtlosen WiFi-Direct-Netzwerk getrennt wird, und ferner konfiguriert ist, um, wenn ein Remote-Gerät eines zweiten Typs unter dem einen oder den mehreren Remote-Geräten, die verwaltet werden sollen, von dem bestimmten drahtlosen WiFi-Direct-Netzwerk getrennt wird, den Haltezeitraum nicht zu bestimmen; und
eine Fortführungszeitraum-Bestimmungseinheit (46), die konfiguriert ist, um, in dem ersten Fall, in dem eine Anzahl an Remote-Geräten, die verwaltet werden sollen, 0 wird, ein Ende eines des einen oder der mehreren Haltezeiträume zu bestimmen, die von der Haltezeitraum-Bestimmungseinheit bestimmt wurden, das spätestens als ein Ende des Fortführungszeitraums kommt,
wobei das Remote-Gerät des ersten Typs ein Remote-Gerät ist, das von dem bestimmten drahtlosen WiFi-Direct-Netzwerk getrennt wird, ohne ein Trennsignal an die drahtlose Kommunikationsvorrichtung zu liefern, und
wobei das Remote-Gerät des zweiten Typs ein Remote-Gerät ist, das von dem bestimmten drahtlosen WiFi-Direct-Netzwerk getrennt wird, indem es das Trennsignal an die drahtlose Kommunikationsvorrichtung liefert.

4. Drahtlose Kommunikationsvorrichtung nach Anspruch 1 oder 2,
wobei die Betriebssteuereinheit Folgendes umfasst:
eine Informationserlangungseinheit (44), die konfiguriert ist, um von jedem des einen oder der mehreren Remote-Geräte, die verwaltet werden sollen, Kategorieinformationen zu erlangen, die eine Kategorie von jedem des einen oder der mehreren Remote-Geräte angeben, die verwaltet werden sollen; und
eine Fortführungszeitraum-Bestimmungseinheit (46), die konfiguriert ist, um ein Ende des Fortführungszeitraums auf Grundlage von mindestens einem von einem oder mehreren Teilen der Kategorieinformationen zu bestimmen, die von dem einen oder den mehreren Remote-Geräten erlangt wurden, die verwaltet werden sollen.

5. Drahtlose Kommunikationsvorrichtung nach Anspruch 4,
wobei in dem ersten Fall, in dem die Anzahl an Remote-Geräten, die verwaltet werden sollen, 0 wird, die Fortführungszeitraum-Bestimmungseinheit konfiguriert ist, um das Ende des Fortführungszeitraums auf Grundlage von nur einem Teil der Kategorieinformationen zu bestimmen, die von einem zuletzt getrennten Remote-Gerät erlangt wurden, das ein letztes Gerät ist, das von dem bestimmten drahtlosen WiFi-Direct-Netzwerk unter dem einen oder den mehreren Remote-Geräten getrennt wurde, die verwaltet werden sollen.

6. Drahtlose Kommunikationsvorrichtung nach Anspruch 4 oder 5, ferner umfassend:
einen Speicher (32), der konfiguriert ist, um eine Vielzahl von Teilen der Kategorieinformationen und eine Vielzahl von Zeiträumen zu speichern, während jedes Teil der Kategorieinformationen mit einem der Vielzahl von Zeiträumen auf Grundlage der Kategorieinformationen assoziiert wird,
wobei die Fortführungszeitraum-Bestimmungseinheit konfiguriert ist, um ein Ende des Fortführungszeitraums auf Grundlage von einem der Vielzahl von Zeiträumen zu bestimmen, die mit einem Teil der Kategorieinformationen assoziiert sind, die von dem zuletzt getrennten Remote-Gerät erlangt wurden.

7. Drahtlose Kommunikationsvorrichtung nach Anspruch 4,
wobei die Betriebssteuereinheit ferner Folgendes umfasst:
eine Haltezeitraum-Bestimmungseinheit (48), die konfiguriert ist, um jedes Mal, wenn ein Remote-Gerät eines ersten Typs unter dem einen oder den mehreren Remote-Geräten, die verwaltet werden sollen, von dem bestimmten drahtlosen WiFi-Direct-Netzwerk getrennt wird, einen Haltezeitraum auf Grundlage eines Teils der Kategorieinformationen zu bestimmen, die vom dem Remote-Gerät des ersten Typs erlangt wurden, wobei der Haltezeitraum an einem Zeitpunkt beginnt, an dem das Remote-Gerät des ersten Typs von dem bestimmten drahtlosen WiFi-Direct-Netzwerk getrennt wird,
wobei in dem ersten Fall, in dem die Anzahl an Remote-Geräten, die verwaltet werden sollen, 0 wird, die Haltezeitraum-Bestimmungseinheit konfiguriert ist, um ein Ende von einem des einen oder der mehreren Haltezeiträume zu bestimmen, die durch die Haltezeitraum-Bestimmungseinheit bestimmt wurden, das spätestens als das Ende des Fortführungszeitraums kommt.

8. Drahtlose Kommunikationsvorrichtung nach Anspruch 7,
wobei, wenn ein Remote-Gerät eines zweiten Typs unter dem einen oder den mehreren Remote-Geräten, die verwaltet werden sollen, von dem bestimmten drahtlosen WiFi-Direct-Netzwerk getrennt wird, die Haltezeitraum-Bestimmungseinheit konfiguriert ist, um den Haltezeitraum nicht zu bestimmen,
wobei das Remote-Gerät des ersten Typs ein Remote-Gerät ist, das von dem bestimmten drahtlosen WiFi-Direct-Netzwerk getrennt wird, ohne ein Trennsignal an die drahtlose Kommunikationsvorrichtung zu liefern, und
wobei das Remote-Gerät des zweiten Typs ein Remote-Gerät ist, das von dem bestimmten drahtlosen WiFi-Direct-Netzwerk getrennt wird, indem es das Trennsignal an die drahtlose Kommunikationsvorrichtung liefert.

9. Drahtlose Kommunikationsvorrichtung nach Anspruch 7 oder 8, ferner umfassend:
einen Speicher (32), der konfiguriert ist, um eine Vielzahl von Teilen der Kategorieinformationen und entsprechenden Zeiträumen zu speichern, während jedes Teil der Kategorieinformationen mit jedem Zeitraum assoziiert wird,
wobei, jedes Mal, wenn das Remote-Gerät des ersten Typs von dem bestimmten drahtlosen WiFi-Direct-Netzwerk getrennt wird, die Haltezeitraum-Bestimmungseinheit konfiguriert ist, um ein Ende des Haltezeitraums auf Grundlage von einem Zeitraum zu bestimmen, der mit einem Teil der Kategorieinformationen assoziiert wird, die von dem Remote-Gerät des ersten Typs erlangt wurden.

10. Computerlesbares Speichermedium, das computerlesbare Anweisungen für einen Prozessor einer drahtlosen Kommunikationsvorrichtung umfasst, die in der Lage ist, selektiv als ein Gruppenbesitzer oder ein Client in einem drahtlosen WiFi-Direct-Netzwerk betrieben zu werden, wobei die computerlesbaren Anweisungen den Prozessor anweisen, die folgenden Schritte auszuführen:
Ausführen einer Gruppenbesitzer-Vermittlung (S22), um zu bestimmen, ob die drahtlose Kommunikationsvorrichtung als ein Gruppenbesitzer oder ein Client in einem bestimmten drahtlosen WiFi-Direct-Netzwerk betrieben wird,
Verwalten, wenn die drahtlose Kommunikationsvorrichtung als der Gruppenbesitzer in dem bestimmten drahtlosen WiFi-Direct-Netzwerk betrieben wird, eines oder mehrerer Remote-Geräte, die als Clients in dem bestimmten drahtlosen WiFi-Direct-Netzwerk betrieben werden; und
Steuern, wenn die drahtlose Kommunikationsvorrichtung als der Gruppenbesitzer in dem bestimmten drahtlosen WiFi-Direct-Netzwerk betrieben wird, den Betrieb der drahtlosen Kommunikationsvorrichtung als der Gruppenbesitzer fortzuführen, bis ein Fortführungszeitraum abläuft, in einem ersten Fall, in dem die Anzahl an Remote-Geräten, die verwaltet werden sollen, 0 wird, wobei der Fortführungszeitraum an einem Zeitpunkt beginnt, an dem die Anzahl an Remote-Geräten, die verwaltet werden sollen, 0 wird,
wobei der Steuerschritt ein Fortführen des Betriebs der drahtlosen Kommunikationsvorrichtung als der Gruppenbesitzer in dem bestimmten drahtlosen WiFi-Direct-Netzwerk beinhaltet, selbst nach einem Ablauf des Fortführungszeitraums, wenn die Anzahl an Remote-Geräten, die verwaltet werden sollen, 1 oder mehr wird, bevor der Fortführungszeitraum abläuft, und
wobei der Steuerschritt ein Stoppen des Betriebs der drahtlosen Kommunikationsvorrichtung als der Gruppenbesitzer nach dem Ablauf des Fortführungszeitraums beinhaltet, wenn die Anzahl an Remote-Geräten, die verwaltet werden sollen, 0 bleibt, bis der Fortführungszeitraum abläuft.

## Revendications

1. Appareil de communication sans fil (10, 70, 80, 90) capable de sélectivement fonctionner en tant que propriétaire de groupe ou client dans un réseau sans fil Wi-Fi Direct, comprenant :
une unité de commande (42) configurée pour réaliser une négociation de propriétaire de groupe afin de déterminer que l'appareil de communication sans fil fonctionne en tant que propriétaire de groupe ou client dans un réseau sans fil Wi-Fi Direct particulier ;
une unité de gestion (40) configurée pour, lorsque l'appareil de communication sans fil fonctionne en tant que propriétaire de groupe dans le réseau sans fil Wi-Fi Direct particulier, gérer un ou plusieurs dispositifs à distance qui fonctionnent en tant que clients dans le réseau sans fil Wi-Fi Direct particulier ; et
une unité de commande de fonctionnement (42) configurée pour, lorsque l'appareil de communication sans fil fonctionne en tant que propriétaire de groupe dans le réseau sans fil Wi-Fi Direct particulier, continuer le fonctionnement de l'appareil de communication sans fil en tant que propriétaire de groupe jusqu'à ce qu'une période de continuation expire dans un premier cas où le nombre de dispositifs à distance destinés à être gérés atteint 0, dans lequel la période de continuation commence à un instant auquel le nombre de dispositifs à distance destinés à être gérés atteint 0,
dans lequel, si le nombre de dispositifs à distance destinés à être gérés atteint 1 ou plus avant que la période de continuation expire, l'unité de commande de fonctionnement est configurée pour continuer le fonctionnement de l'appareil de communication sans fil en tant que propriétaire de groupe dans le réseau sans fil Wi-Fi Direct particulier même après une expiration de la période de continuation, et
dans lequel, si le nombre de dispositifs à distance destinés à être gérés reste 0 jusqu'à ce que la période de continuation expire, l'unité de commande de fonctionnement est configurée pour arrêter le fonctionnement de l'appareil de communication sans fil en tant que propriétaire de groupe après l'expiration de la période de continuation.

2. Appareil de communication sans fil selon la revendication 1,
dans lequel, dans le premier cas où le nombre de dispositifs à distance destinés à être gérés atteint 0 sans obtenir de signal de déconnexion à partir d'un dispositif à distance enlevé en dernier, qui est un dernier dispositif qui a été enlevé du réseau Wi-Fi Direct particulier parmi les un ou plusieurs dispositifs à distance destinés à être gérés, l'unité de commande de fonctionnement est configurée pour continuer le fonctionnement de l'appareil de communication sans fil en tant que propriétaire de groupe jusqu'à ce que la période de continuation expire, et
dans lequel, dans un second cas où le nombre de dispositifs à distance destinés à être gérés atteint 0 alors que le signal de déconnexion est obtenu du dispositif à distance enlevé en dernier, l'unité de commande de fonctionnement est configurée pour arrêter le fonctionnement de l'appareil de communication sans fil en tant que propriétaire de groupe avant que la période de continuation expire.

3. Appareil de communication sans fil selon la revendication 1,
dans lequel l'unité de commande de fonctionnement comprend :
une unité de détermination de période de maintien (48) configurée pour, à chaque fois qu'un dispositif à distance de premier type parmi les un ou plusieurs dispositifs à distance destinés à être gérés est enlevé du réseau sans fil Wi-Fi Direct particulier, déterminer une période de maintien qui commence à un instant auquel le dispositif à distance de premier type est enlevé du réseau sans fil Wi-Fi Direct particulier, et est en outre configurée, si un dispositif à distance de second type parmi les un ou plusieurs dispositifs à distance destinés à être gérés est enlevé du réseau sans fil Wi-Fi Direct particulier, pour ne pas déterminer la période de maintien ; et
une unité de détermination de période de continuation (46) configurée pour, dans le premier cas où le nombre de dispositifs à distance destinés à être gérés atteint 0, déterminer une fin d'une d'une ou de plusieurs périodes de maintien déterminées par l'unité de détermination de période de maintien qui arrive en dernier en tant que fin de la période de continuation,
dans lequel le dispositif à distance de premier type est un dispositif à distance qui est enlevé du réseau sans fil Wi-Fi Direct particulier sans fournir de signal de déconnexion à l'appareil de communication sans fil, et
dans lequel le dispositif à distance de second type est un dispositif à distance qui est enlevé du réseau sans fil Wi-Fi Direct particulier en fournissant le signal de déconnexion à l'appareil de communication sans fil.

4. Appareil de communication sans fil selon la revendication 1 ou 2,
dans lequel l'unité de commande de fonctionnement comprend :
une unité d'obtention d'informations (44) configurée pour obtenir, à partir de chacun des un ou plusieurs dispositifs à distance destinés à être gérés, des informations de catégorie indiquant une catégorie de chacun des un ou plusieurs dispositifs à distance destinés à être gérés ; et
une unité de détermination de période de continuation (46) configurée pour déterminer une fin de la période de continuation sur la base d'au moins un d'un ou de plusieurs éléments des informations de catégorie obtenues des un ou plusieurs dispositifs à distance destinés à être gérés.

5. Appareil de communication sans fil selon la revendication 4,
dans lequel, dans le premier cas où le nombre de dispositifs à distance destinés à être gérés atteint 0, l'unité de détermination de période de continuation est configurée pour déterminer la fin de la période de continuation sur la base seulement d'un élément des informations de catégorie obtenues d'un dispositif à distance enlevé en dernier, qui est un dernier dispositif qui a été enlevé du réseau sans fil Wi-Fi Direct particulier parmi les un ou plusieurs dispositifs à distance destinés à être gérés.

6. Appareil de communication sans fil selon la revendication 4 ou 5, comprenant en outre :
une mémoire (32) configurée pour stocker une pluralité d'éléments des informations de catégorie et une pluralité de périodes, tout en associant chaque élément des informations de catégorie à une de ladite pluralité de périodes sur la base des informations de catégorie,
dans lequel l'unité de détermination de période de continuation est configurée pour déterminer la fin de la période de continuation sur la base de ladite une de ladite pluralité de périodes associée à un élément des informations de catégorie obtenues du dispositif à distance enlevé en dernier.

7. Appareil de communication sans fil selon la revendication 4,
dans lequel l'unité de commande de fonctionnement comprend en outre :
une unité de détermination de période de maintien (48) configurée pour, à chaque fois qu'un dispositif à distance de premier type parmi les un ou plusieurs dispositifs à distance destinés à être gérés est enlevé du réseau sans fil Wi-Fi Direct particulier, déterminer une période de maintien sur la base d'un élément des informations de catégorie obtenues du dispositif à distance de premier type, dans lequel la période de maintien commence à un instant auquel le dispositif à distance de premier type est enlevé du réseau sans fil Wi-Fi Direct particulier,
dans lequel, dans le premier cas où le nombre de dispositifs à distance destinés à être gérés atteint 0, l'unité de détermination de période de maintien est configurée pour déterminer une fin d'une d'une ou de plusieurs périodes de maintien déterminées par l'unité de détermination de période de maintien qui arrive en dernier en tant que fin de la période de continuation.

8. Appareil de communication sans fil selon la revendication 7,
dans lequel, si un dispositif à distance de second type parmi les un ou plusieurs dispositifs à distance destinés à être gérés est enlevé du réseau sans fil Wi-Fi Direct particulier, l'unité de détermination de période de maintien est configurée pour ne pas déterminer la période de maintien,
dans lequel le dispositif à distance de premier type est un dispositif à distance qui est enlevé du réseau sans fil Wi-Fi Direct particulier sans fournir de signal de déconnexion à l'appareil de communication sans fil, et
dans lequel le dispositif à distance de second type est un dispositif à distance qui est enlevé du réseau sans fil Wi-Fi Direct particulier en fournissant le signal de déconnexion à l'appareil de communication sans fil.

9. Appareil de communication sans fil selon la revendication 7 ou 8, comprenant en outre :
une mémoire (32) configurée pour stocker une pluralité d'éléments des informations de catégorie et des périodes correspondantes tout en associant chaque élément des informations de catégorie à chaque période,
moyennant quoi, à chaque fois que le dispositif à distance de premier type est enlevé du réseau sans fil Wi-Fi Direct particulier, l'unité de détermination de période de maintien est configurée pour déterminer une fin de la période de maintien sur la base d'une période associée à un élément des informations de catégorie obtenues du dispositif à distance de premier type.

10. Support de stockage lisible par ordinateur, comprenant des instructions lisibles par ordinateur pour un processeur d'un appareil de communication sans fil capable de sélectivement fonctionner en tant que propriétaire de groupe ou client dans un réseau sans fil Wi-Fi Direct, les instructions lisibles par ordinateur donnant l'instruction au processeur de réaliser les étapes de :
la réalisation d'une négociation de propriétaire de groupe (S22) afin de déterminer que l'appareil de communication sans fil fonctionne en tant que propriétaire de groupe ou client dans un réseau sans fil Wi-Fi Direct particulier
la gestion, lorsque l'appareil de communication sans fil fonctionne en tant que propriétaire de groupe dans le réseau sans fil Wi-Fi Direct particulier, d'un ou de plusieurs dispositifs à distance qui fonctionnent en tant que clients dans le réseau sans fil Wi-Fi Direct particulier ; et
la commande, lorsque l'appareil de communication sans fil fonctionne en tant que propriétaire de groupe dans le réseau sans fil Wi-Fi Direct particulier, pour continuer le fonctionnement de l'appareil de communication sans fil en tant que propriétaire de groupe jusqu'à ce qu'une période de continuation expire dans un premier cas où le nombre de dispositifs à distance destinés à être gérés atteint 0, dans lequel la période de continuation commence à un instant auquel le nombre de dispositifs à distance destinés à être gérés atteint 0,
dans lequel l'étape de la commande inclut la continuation du fonctionnement de l'appareil de communication sans fil en tant que propriétaire de groupe dans le réseau sans fil Wi-Fi Direct particulier même après une expiration de la période de continuation si le nombre de dispositifs à distance destinés à être gérés atteint 1 ou plus avant que la période de continuation expire, et
dans lequel l'étape de la commande inclut l'arrêt du fonctionnement de l'appareil de communication sans fil en tant que propriétaire de groupe après l'expiration de la période de continuation si le nombre de dispositifs à distance destinés à être gérés reste 0 jusqu'à ce que la période de continuation expire.
